# EUROPEAN PATENT SPECIFICATION

(11) **EP 2 079 219 B1**
(45) Date of publication and mention of the grant of the patent: **10.06.2015**
(21) Application number: 09150150.2
(22) Date of filing: 07.01.2009
(51) Int. Cl.: H04L 29/08, G06F 17/30

(54) **Data sharing system, data sharing method, information processing apparatus, and computer-readable storage medium**
Datenverbundsystem, Datenverbundverfahren, Informationsverarbeitungsvorrichtung und computerlesbarer Datenträger
Système de partage de données, procédé de partage de données, appareil de traitement d'informations, et support de stockage lisible sur ordinateur

(30) Priority: 11.01.2008 JP 2008004573
(43) Date of publication of application: 15.07.2009
(73) Proprietor: Canon Kabushiki Kaisha, Tokyo 146-8501 (JP)
(72) Inventor: Sugawara, Kazuhiro, Tokyo Tokyo 146-8501 (JP)
(74) Representative: TBK

(56) References cited:
- EP-A- 1 659 488
- WO-A-03/012578
- WO-A-03/013099
- US-A1- 2006 195 914

## Description

### BACKGROUND OF THE INVENTION

### Field of the Invention

The present invention relates to a data sharing system in which nodes on a network share duplicated data of original data which is stored in an original node, a data sharing method, an information processing apparatus, and a computer-readable storage medium.

### Description of the Related Art

As the system for sharing data, a system is conventionally known which use a server such as a shared server in which data is accumulated. In such a system, the server performs centralized control of data. Further, data formed by duplicating original data stored in another device (node) on the network, i.e. duplicated data is stored in the server, and the duplicated data of the original data is referred to as the shared data from nodes on the network.

Further, as the system for sharing data, a system is also proposed in which data are shared by exchanging files thereof in the form of PtoP (P2P) on the network, using software such as Gnutella or Winny (see e.g. Japanese Patent Laid-Open Publication No. 2004-164625). In the case of such a data sharing system using PtoP, the duplicated data of the original data is spread to nodes within the same system, and the spread duplicated data is shared between the nodes.

In the case of the data sharing system using a server, a node (original node) storing original data is capable of updating and deleting duplicated data of the original data, which is stored in the server. However, the original node is not capable of handling the duplicated data of the original data, which is stored in the nodes other than the server.

Further, in case of the system using PtoP, as for tracking duplicated data, it is possible to identify the original node from history of transmitted data. However, if one of the connected nodes is isolated from the network, or if one of the connected nodes is powered off, it is impossible to track the duplicated data further beyond the isolated or powered-off node.

Further, the owner of the original data is not capable of handling all duplicated data of the original data, from the original node. This can cause duplicated data of original data which has already been deleted or duplicated data of an older version of original data to continue to be repeatedly duplicated, resulting in the spreading of such data in the network.

In the document US 2006/0195914 A1, there are disclosed provisions for validating content transferred over a communication channel using a content registration authority. According thereto, a content registration authority registers content disseminated by one or more content providers to one or more client devices. A client device can securely consume the registered content based on an assumption that a content provider which furnishes the content is entrusted by the content registration authority to provide the content. However, the thus disclosed technique may not effectively overcome the problems and drawbacks outlined above.

### SUMMARY OF THE INVENTION

The present invention provides a data sharing system, an information processing apparatus, and a data sharing method, which are capable of preventing duplicated data which does not match original data stored in an original node from being spread across the network.

Further, the present invention provides a computer-readable storage medium storing a program for forming an original node or a node.

In a first aspect of the present invention, there is provided a data sharing system as defined in claim 1.

In a second aspect of the present invention, there is provided a data sharing method as defined in claim 8.

In a third aspect of the present invention, there is provided an information processing apparatus as defined in claim 9.

In a fourth aspect of the present invention, there is provided a computer-readable storage medium as defined in claim 10.

Further developments and/or modifications of the aspects of the present invention are set out in respective dependent claims.

According to the present invention, it is possible to prevent duplicated data which does not match the original data which is stored in the original node from being spread across the network.

The features and advantages of the invention will become more apparent from the following detailed description taken in conjunction with the accompanying drawings.

### BRIEF DESCRIPTION OF THE DRAWINGS

FIG. 1 is a block diagram of a data sharing system according to an embodiment of the present invention.

FIG. 2 is a block diagram of a terminal apparatus which forms each of nodes A, B, C, and D appearing in FIG. 1.

FIG. 3 is a diagram of a list of various request commands and responses thereto which are exchanged between the nodes A to D.

FIG. 4 is a diagram of the construction of each of duplicated data 112, 121, 131, and 141.

FIG. 5 is a diagram of an example of the construction of a duplicating node list stored in the node A.

FIG. 6 is a flowchart of a response-to-request command process executed when the node A receives a duplication request and a confirmation request accompanying the duplication request as request commands which are transmitted from the other nodes B, C, and D.

FIG. 7 is a flowchart of a data confirmation process in a step S408 in FIG. 6.

FIG. 8 is a flowchart of a duplication request process executed by each of the nodes B to D.

FIG. 9 is a schematic diagram useful in explaining update requests and responses thereto which are exchanged between the node A and the nodes B, C, and D, when the node A updates original data.

FIG. 10 is a flowchart of a duplicated data-updating process for updating the duplicated data stored in each of the other nodes B to D when the node A has updated original data.

FIG. 11 is a flowchart of an update requesting process for a node (i) in a step S1005 in FIG. 10.

FIG. 12 is a flowchart of a duplicated data update request-responsive process executed by each of the nodes B to D for updating the duplicated data in response to the update request.

FIG. 13 is a schematic diagram useful in explaining deletion requests and responses which are exchanged between the node A and each of the nodes B, C, and D, when the original data is deleted in the node A.

FIG. 14 is a flowchart of a duplicated data-deleting process for deleting the duplicated data (duplicated data of the above-mentioned deleted original data) which is stored in each of the other nodes B to D when the original data is deleted in the node A.

FIG. 15 is a flowchart of a deletion requesting process for a node (i) of a step S1405 in FIG. 14.

FIG. 16 is a flowchart of a duplicated data deletion request-responsive process executed by each of the nodes B to D (duplicating nodes) for deleting the duplicated data which is requested to be deleted by the deletion request.

FIG. 17 is a schematic diagram useful in explaining requests and responses thereto exchanged between the node D storing duplicated data to be updated and the node A, when the node D disconnected from a LAN is connected again to the LAN.

FIG. 18 is a schematic diagram useful in explaining requests and responses thereto exchanged between the node D storing duplicated data to be deleted and the node A, when the node D disconnected from the LAN is connected again to the LAN.

FIG. 19 is a flowchart of a process in case where a node disconnected from the LAN is connected again to the LAN to take part in the data sharing system.

FIG. 20 is a continuation of the FIG. 19 flowchart

FIG. 21 is a flowchart of a second data confirmation process executed by the node A (original node) which has received a confirmation request from a node disconnected from the LAN has returned to a state connected thereto.

### DETAILED DESCRIPTION OF THE EMBODIMENTS

The present invention will now be described in detail with reference to the accompanying drawings showing embodiments thereof.

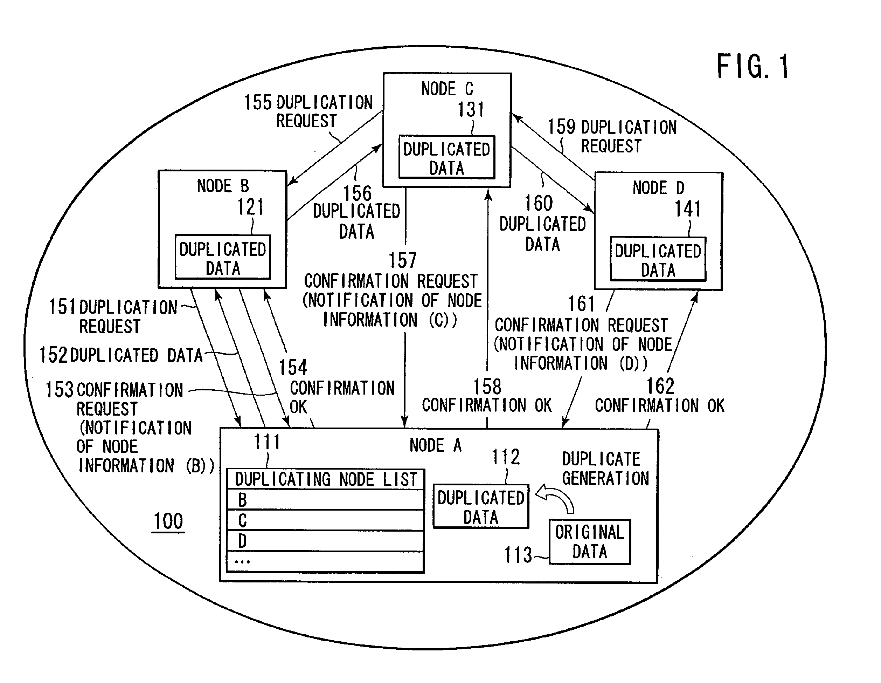

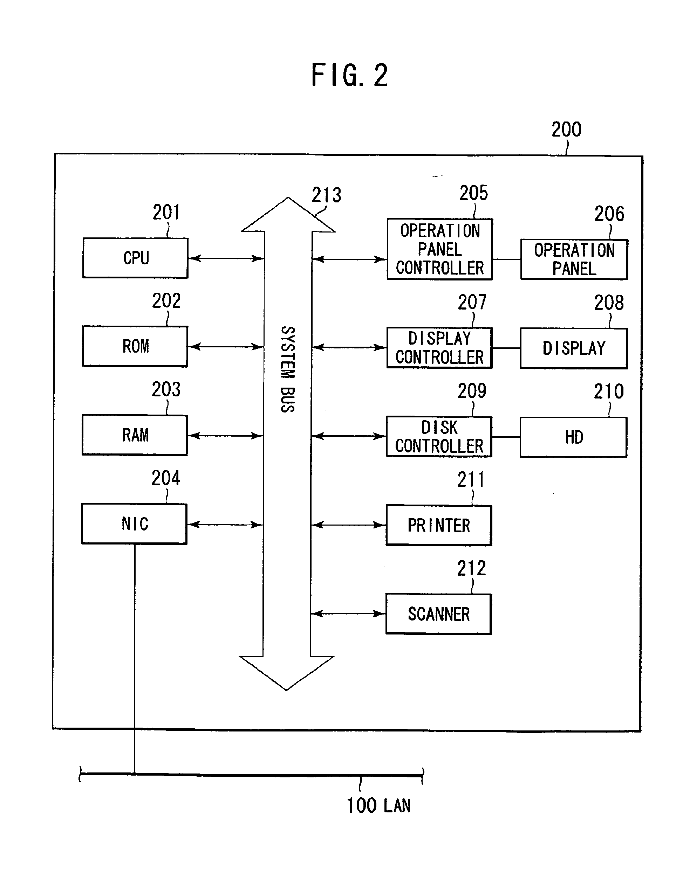

FIG. 1 is a block diagram of a data sharing system according to an embodiment of the present invention. FIG. 2 is a block diagram of an information processing apparatus which forms each of nodes A, B, C, and D appearing in FIG. 1.

The data sharing system, as shown in FIG. 1, is comprised of a plurality of nodes A, B, C, and D which are connected to each other within a network, e.g. a LAN (Local Area Network) 100. Now, it is assumed that the node A is an original node that stores original data. The node A stores a duplicating node list 111, duplicated data (duplicate of the original data) 112, and the original data 113. In the present embodiment, a node storing original data of duplicated data which is stored as shared data in the other nodes, such as the above-mentioned node A, is specifically referred to as an original node.

The duplicating node list 111 manages the nodes B, C, and D which store duplicated data of the original data, as data-duplicating nodes. The duplicated data 112 includes duplicated data of the original data 113, and node information indicating the original node A which stores the original data of the duplicated data. A detailed construction of the duplicating node list 111 and the duplicated data 112 will be described hereinafter.

It should be noted that the nodes B, C, and D are the data-duplicating nodes which store duplicated data 121, 131, 141 of the above-mentioned original data 113. In the illustrated example, the node B acquires the duplicated data 121 by copying the duplicated data 112 from the node A via the LAN 100. Further, the node C acquires the duplicated data 131 by copying the duplicated data 121 from the node B via the LAN 100. Further, the node D acquires the duplicated data 141 by copying the duplicated data 131 from the node C via the LAN 100.

The information processing apparatus forming each of the above-mentioned nodes A, B, C, and D is implemented by a multifunction peripheral 200, for example. The multifunction peripheral 200 includes a CPU 201. The CPU 201 performs centralized control of devices connected to a system bus 213, by executing software stored in a ROM 202 or a hard disk (HD) 210. A work area of the CPU 201 is provided by a RAM 203.

The ROM 202 and the RAM 203 as well as a network interface card (NIC) 204, an operation panel controller 205, a display controller 207, and a disk controller 209 are connected to the system bus 213. Further, a printer 211 and a scanner 212 are connected to the system bus 213.

The NIC 204 performs control for transmitting and receiving data to/from the other nodes via the LAN 100. The operation panel controller 205 inputs information (setting information, instruction information, etc.) which are inputted by the user on an operation panel 206 having various keys, and transmits the information to the CPU 201. The display controller 207 performs control such that the information generated by the CPU 201 is displayed on a display 208. The disk controller 209 controls writing and reading of data into and out of the HD 210. The printer 211 prints images on a sheet, by an electrophotographic method or an ink-jet method. The scanner 212 reads an image on an original, and outputs the read image. The image read by the scanner 212 is transmitted to the printer 211, or another apparatus via the LAN 100. Further, the image read by the scanner 212 is stored in the HD 210, as required.

In the present data sharing system, data which are stored in the node A as data shared by the other nodes B, C, and D include e.g. font data, print data, controller firmware, and backup data, and these data are stored in the HD 210.

In the present embodiment, to share the duplicated data 112 of the original data 113 stored in the node A, various request commands are exchanged between the nodes A to D.

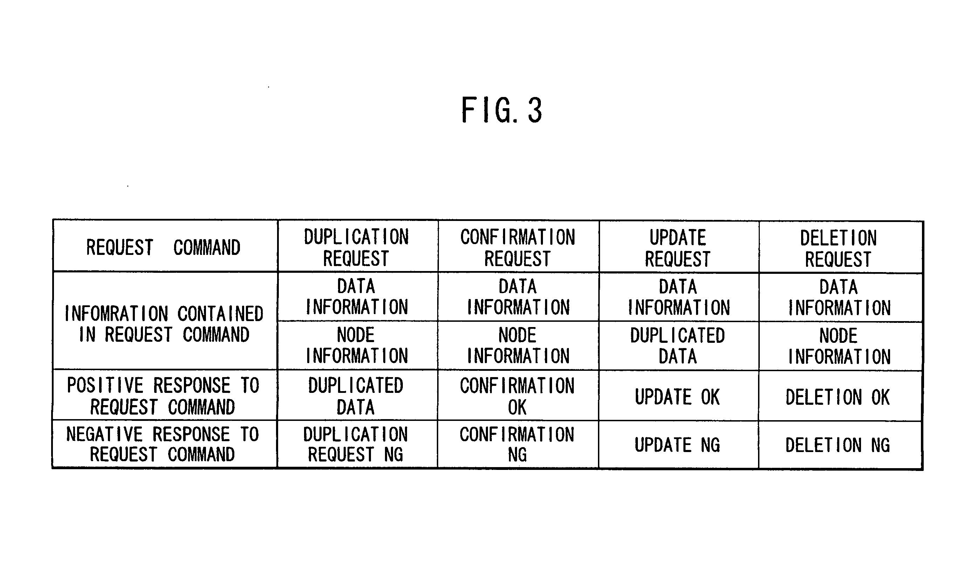

A description will be given of the various request commands with reference to FIG. 3. FIG. 3 is a diagram of a list of various request commands and responses thereto which are exchanged between the nodes A to D.

The various request commands include a duplication request, a confirmation request, an update request, and a deletion request. The duplication request is for requesting the duplicated data of the original data from the original node storing desired original data (or duplicated data thereof) or another node storing the duplicated data thereof. The duplication request contains data information for identifying the duplicated data of the original data, and node information indicating a duplication requesting node that requests the duplicated data. The data information is information by which the duplicated data of the original data can be identified, such as a file name, a file size, and a date and time of file creation. The node information is e.g. an IP address, a MAC address, a URL, or a mail address.

The node which has received the duplication request returns a positive response or a negative response to the duplication requesting node indicated by the node information contained in the duplication request. The positive response is returned when the duplicated data exists which is requested by the duplication request (identified by the data information contained in the duplication request), and as the positive response, the duplicated data requested by the duplication request is returned. The negative response is returned when the duplicated data does not exist, or duplication thereof is not permitted, or in like cases, and as the negative response, duplication request NG is returned.

The node (duplication requesting node) that has received the above-mentioned positive response, i.e. has acquired the duplicated data transmits a confirmation request to the original node which is indicated by node information added to the duplicated data. This confirmation request is for requesting confirmation of whether or not the above-mentioned duplicated data matches the original data stored in the original node. The confirmation request contains data information contained in the duplicated data returned as the positive response, and node information indicating the node having received the positive response (confirmation requesting node). This node information is e.g. an IP address, a MAC address, an URL, a mail address, or the like.

The original node having received the confirmation request returns a result of confirmation on the confirmation request to the confirmation requesting node. Now, if the duplicated data matches the original data, the result of confirmation indicative of the fact is returned as "confirmation OK (positive response)". The confirmation requesting node having received the confirmation OK stores the acquired duplicated data and makes the same open to the nodes on the LAN 100. On the other hand, if the duplicated data does not match the original data, the result of confirmation indicative of that is returned as "confirmation NG (negative response)". The confirmation requesting node having received the confirmation NG deletes the acquired duplicated data.

It should be noted that the update request is for requesting the duplicating node storing the duplicated data of the original data to update the duplicated data, when the original data is updated in the original node. The update request contains data information for identifying the duplicated data which is requested to be updated, and the duplicated data of the updated original data. The duplicating node having received the update request carries out a process for updating the duplicated data identified by the data information of the update request to the duplicated data contained in the above-mentioned update request. Then, if the update of the above-mentioned identified duplicated data is normally completed, "update OK (positive response)" is returned to the original node. On the other hand, if the update of the above-mentioned identified duplicated data is not normally completed, "update NG (negative response) " is returned to the original node.

It should be noted that if the original data is deleted in the original node, the above-mentioned deletion request requests the duplicating node storing the duplicated data of the original data to delete the duplicated data. The deletion request contains data information for identifying the duplicated data requested to be deleted. The duplicating node having received the above-mentioned deletion request carries out a process for deleting one of duplicated data items stored therein, which is identified by the data information of the deletion request. Then, if the deletion of the identified duplicated data is normally completed, "deletion OK (positive response)" is returned to the original node. On the other hand, if the deletion of the identified duplicated data is not normally completed, "deletion NG (negative response)" is returned to the original node.

Further, when a node storing duplicated data is returned from a state disconnected from the network to a state connected to the network, the node transmits a confirmation request (second confirmation request) to the original node. This confirmation request requests the original node indicated by the node information contained in the duplicated data to confirm whether or not the duplicated data stored in the node is to be updated or deleted. This confirmation request contains data information for identifying the duplicated data of which the above-mentioned confirmation is requested. The original node having received the confirmation request confirms whether or not the duplicated data (duplicated data identified by the data information) of which the above-mentioned confirmation is requested by the confirmation request is to be updated or deleted, by referring to the duplicating node list 111. Then, if it is confirmed that the above-mentioned duplicated data is valid data which is not required to be updated or deleted, the confirmation OK is returned as a result of confirmation. On the other hand, if it is confirmed that the duplicated data is to be updated, the update request is returned as a result of confirmation. Further, if it is confirmed that the duplicated data is to be deleted, the deletion request is returned as a result of confirmation. Further, if the confirmation of the above-mentioned duplicated data is not successful, the confirmation NG is returned as a result of confirmation.

The confirmation requesting node (second confirmation requesting node) having received the result of confirmation responsive to the confirmation request (second confirmation request) carries out a process dependent on the result of confirmation. The node having received the confirmation OK makes the duplicated data of which it requested the above-mentioned confirmation by the confirmation request open to the public on the LAN 100. The node having received the update request carries out a process for updating the duplicated data of which it requested the above-mentioned confirmation by the confirmation request to the duplicated data contained in the update request. The node having received the deletion request carries out a process for deleting the duplicated data of which it requested the above-mentioned confirmation by the confirmation request. The node having received the confirmation NG deletes the duplicated data of which it requested the above-mentioned confirmation by the confirmation request.

The processes executed by the above-mentioned various request commands will be described in detail hereinafter.

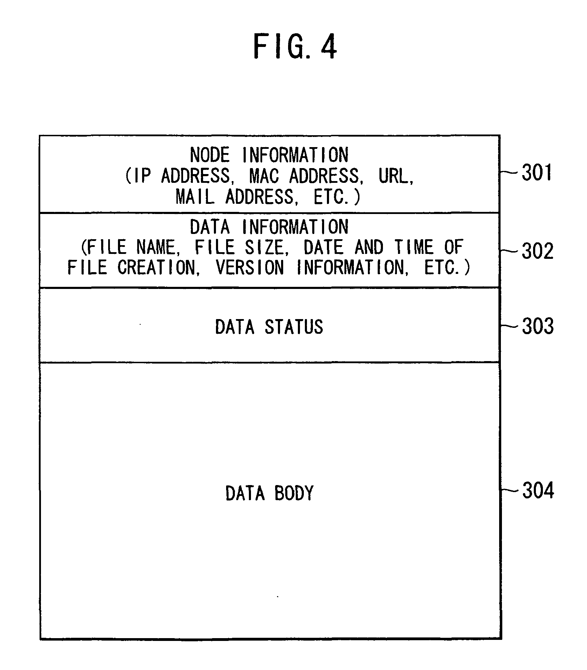

Next, a description will be given of the construction of the duplicated data 112, 121, 131, and 141 with reference to FIG. 4. FIG. 4 is a diagram of the construction of each of the duplicated data 112, 121, 131, and 141.

As shown in FIG. 4, the duplicated data 112, 121, 131, and 141 are each formed by adding node information 301, data information 302, and data status 303 to a data body 304 which is the duplicated data of the original data. In the present embodiment, it is assumed that the node information 301 is an IP address, a MAC address, an URL, a mail address or like node information indicating a node on the LAN 100 which stores the original of the duplicated data. The data information 302 is formed by information for identifying the duplicated data, such as a file name, a file size, a date and time of file creation, version information, and the like. The data status 303 is data that can be rewritten by the node (including the original node) which stores the duplicated data. For example, in the original node (node A in the illustrated example) which stores the original data, the data status 303 is set to "the original". Further, in the duplicating node which stores the duplicated data of the original data, the data status 303 is set to "confirmed" or "unconfirmed".

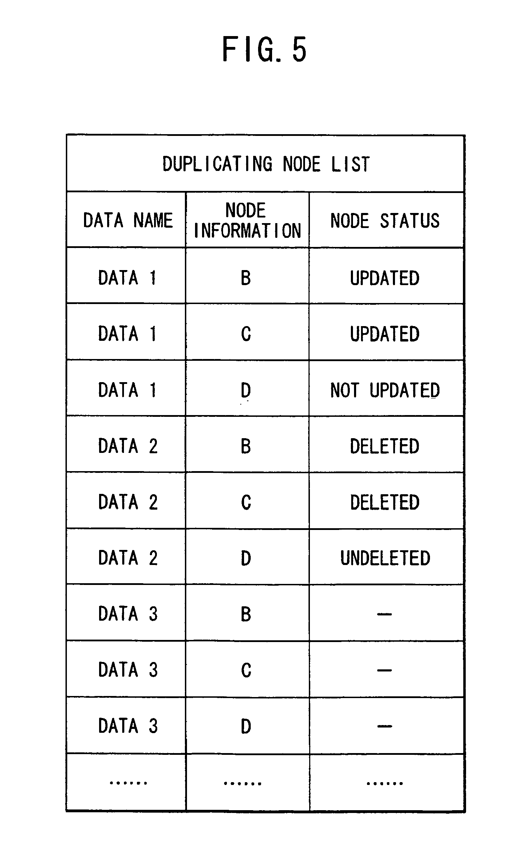

Next, a description will be given of the duplicating node list 111 which is stored in the node A (original node) with reference to FIG. 5. FIG. 5 is a diagram of an example of the construction of the duplicating node list 111 which is stored in the node A.

As shown in FIG. 5, the duplicating node list 111 stores the node information on the nodes B, C, and D storing the duplicated data of the original data stored in the node A, on an original data item-by-original data item basis. The illustrated example of the duplicating node list 111 stores data names of original data items, node information indicating nodes (duplicating nodes) storing duplicated data, and node statuses, in a manner associated with each other. As to original data having a name of data 1, for example, the duplicating node list 111 describes that the nodes storing the duplicated data thereof are the node B, the node C, and the node D.

The node statuses include an update status indicating whether or not the duplicated data of the original data has been updated according to the update of the original data, and a deletion status indicating whether or not the duplicated data has been deleted.

Now, when the original data of data 1 in the node A (original node) is updated, the node statuses of all nodes B, C, and D (duplicating nodes) associated with the data 1 in the duplicating node list 111 are set to "not updated". Then, the update request is transmitted to each of the nodes B, C, and D. When the update OK is returned from a duplicating node as a response to the update request, the node status of the duplicating node is rewritten into "updated". In the illustrated example, although as to the data 1, the respective node statuses of the nodes B and C have been rewritten into "updated", the node status of the node D remains "not updated".

When the update of the duplicated data stored in all the duplicating nodes B, C, and D has been completed, information on each associated node status is deleted (changed to the state of no information). For example, as to the data 1, if the duplicated data is updated in each of the nodes B, C, and D storing the duplicated data, the information on the node status of each of the nodes B, C, and E is deleted.

Further, if the original data named as data 2 is deleted, the node statuses of the nodes B, C, and D (duplicating nodes) associated with the data 2 in the duplicating node list 111 is rewritten into "undeleted". Then, the deletion request of the duplicated data of the data 2 is transmitted to each of the nodes B, C, and D. If "deletion OK" is returned as a response to the deletion request from a duplicating node, the node status of the duplicating node is rewritten into "deleted". Now, if the duplicated data is deleted in all the nodes B, C, and D storing the duplicated data of the original data of the data 2, the information related to the original data of the data 2 is deleted from the duplicating node list 111. That is, entries of the data name, the node information, and the node statuses, associated with the original data of the data 2, are deleted.

Next, a description will be given of a case where the nodes B, C, and D acquire (share) the duplicated data 112 of the original data 113 stored in the node A (original node) with reference to FIG. 1.

Let it be assumed that to acquire the original data 113 (duplicated data 112) stored in the node A, the node B searches the network using PtoP, a file server, a file-sharing system, or a like search means. As a result of the search, if the node B finds the original data 113 (duplicated data 112) stored in the node A, the node B transmits a duplication request to the node A (151). The node A transmits the duplicated data 112 to the node B as a response to the duplication request (152). Here, the duplicated data 112 contains the data information for identifying the duplicated data itself, and the node information indicative of the node A. If the duplicated data 112 does not exist in the node A, the duplicated data 112 is generated. The node B receives the duplicated data 112 transmitted from the node A to thereby acquires the same as the duplicated data 121.

Then, the node B transmits a confirmation request which includes data information (data information contained in the duplicated data 121) for identifying the duplicated data 121 and the node information indicative of the node B to the node A (153). The node A confirms whether or not the duplicated data 121 (112) which is acquired by the node B matches the original data 113, based on the data information contained in the confirmation request. Then, if the node A confirms that the duplicated data 121 matches the original data 113, the node A returns the confirmation OK to the node B (154). Further, the node A stores the node information (node information indicative of the node B) contained in the confirmation request in the duplicating node list 111 in association with the data name of the original data 113.

The node B makes the duplicated data 121 acquired from the node A open to the public on the LAN 100, based on the confirmation OK from the node A. At this time, the data status of the duplicated data 121 is set to "confirmed". As the means for making the duplicated data 121 open to the public, there is employed PtoP, a sharing technique using a file server, a file-sharing technique, or a like known technique.

Further, let it be assumed that the node C has searched the network and found the duplicated data 121 of the original data 113 in the node B. In this case, the node C transmits a duplication request to the node B (155). The node B confirms that it stores the requested duplicated data 121 therein, based on the duplication request from the node C, and transmits the duplicated data 121 to the node C (156).

The node C acquires the duplicated data 121 received from the node B as duplicated data 131. Then, the node C transmits a confirmation request to the node indicated by the node information contained in the duplicated data 131 (121), i.e. the node A, for requesting the original node to confirm that the duplicated data 131 matches the original data 113 (157). This confirmation request contains data information on the duplicated data 131 and node information indicative of the node C. The node A confirms whether or not the duplicated data 131 matches the original data 113 based on the confirmation request. Then, if the node A confirms that the duplicated data 131 matches the original data 113, the node A returns the confirmation OK to the node C (158). Further, the node A stores the node information (the node C) included in the confirmation request in the duplicating node list 111 in association with the data name of the original data 113.

The node C makes the duplicated data 131 acquired from the node B open to the public on the LAN 100 based on the confirmation OK. At this time, the data status of the duplicated data 131 is set to "confirmed".

Further, let it be assumed that the node D has searched the network and found the duplicated data 131 of the original data 113 in the node C. In this case, similarly to the case of the node C, the node D transmits a duplication request to the node C (159). The node C transmits the duplicated data 131 requested by the duplication request to the node D (160). The node D acquires the duplicated data 131 as duplicated data 141. Then, the node D transmits a confirmation request to the node A which is indicated by node information in the duplicated data 141 (161).

The node A confirms whether or not the duplicated data 141 matches the original data 113. If the two match each other, the node A returns the confirmation OK to the node D (162). Then, the node A stores the node information indicative of the node D in the duplicating node list 111 in association with the data name of the original data 113.

The node D makes the duplicated data 141 acquired from the node C open to the public on the LAN 100 based on the confirmation OK. At this time, the data status of the duplicated data 141 is set to "confirmed".

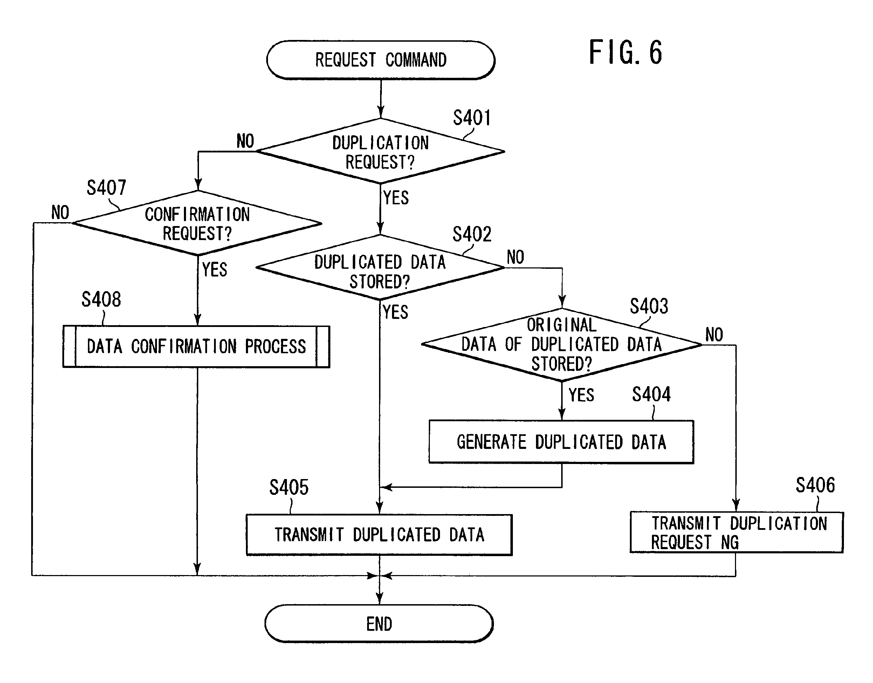

Next, a description will be given of a response-to-request command process executed when the node A (original node) receives a duplication request transmitted from each of the other nodes B, C, and D, and a confirmation request accompanying the duplication request with reference to FIG. 6. FIG. 6 is a flowchart of the response-to-request command process executed when the node A receives the duplication request and the confirmation request accompanying the duplication request as request commands transmitted from each of the other nodes B, C, and D. The response-to-request command process in FIG. 6 is executed by the CPU 201 of the node A according to a program stored in the ROM 202 or the HD 210.

If the node A receives a request command transmitted from any of the other nodes B to D, as shown in FIG. 6, the CPU 201 of the node A analyzes the received request command, and determines whether or not the request command is a duplication request (step S401). At this time, if the received request command is a duplication request, the CPU 201 determines whether or not the duplicated data of the original data requested by the duplication request is stored (step S402).

If it is determined in the step S402 that the duplicated data is not stored, the CPU 201 determines whether or not the original data of the requested duplicated data is stored (step S403). If the original data of the requested duplicated data is stored, the CPU 201 duplicates the original data of the requested duplicated data to generate and store the duplicated data (step S404). At this time, the node information 301 and the data information 302 are added to the generated duplicated data (see FIG. 4).
Further, the data status 303 is added to the duplicated data. In this case, the data status 303 is set to "original". Then, the CPU 201 transmits the generated duplicated data to the duplication requesting node (step S405), followed by terminating the present process.

If it is determined in the step S403 that the original data of the requested duplicated data is not stored, the CPU 201 transmits the duplication request NG (duplication request rejection) to the duplication requesting node as a response to the duplication request (step S406), followed by terminating the present process.

If it is determined in the step S402 that the requested duplicated data is stored, the CPU 201 transmits the requested duplication data to the duplication requesting node as the positive response to the duplication request (step S405), followed by terminating the present process.

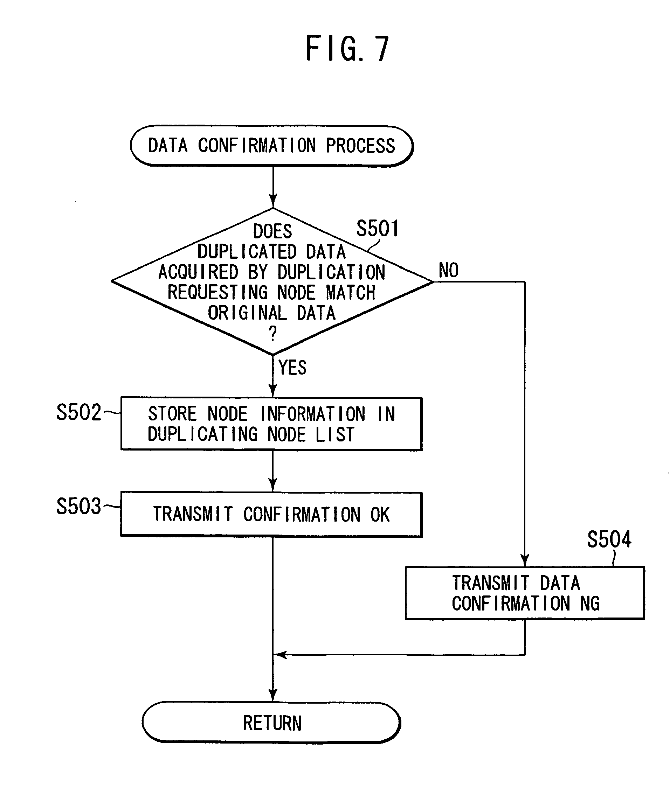

If it is determined in the step S401 that the received request command is not a duplication request, the CPU 201 determines whether or not the received request command is a confirmation request (step S407). The received confirmation request is transmitted from the duplication requesting node (node which has acquired the duplication data from the node A or a node other than node A) to the node A. If the received request command is a confirmation request, the CPU 201 carries out a data confirmation process for confirming whether or not the duplicated data acquired by the node matches the original data stored in the node A (step S408). The data confirmation process will be described in detail hereinafter with reference to FIG. 7. Then, the CPU 201 immediately terminates the present process.

If it is determined in the step S407 that the received request command is not a confirmation request, the CPU 201 immediately terminates the present process.

Now, assuming that any of the nodes B to D of the duplication requesting node attempts to acquire duplicated data stored in a node other than the node A (original node), the node other than the node A having received the duplication request from the duplication requesting node never receive the confirmation request accompanying the duplication request.

In the case of a node other than the nod A (original node) having received the duplication request from one of the nodes B to D as the duplication requesting node, the node carries out the following processing: Upon reception of the duplication request (step S401), it is determined whether or not the duplicated data requested to be duplicated is stored (step S402). If the duplicated data requested to be duplicated is stored, the duplicated data is transmitted to the duplication requesting node (step S405) On the other hand, if the duplicated data requested to be duplicated is not stored, since the response-to-request command process is being executed by the node other than the node A (original node), the duplication request NG is directly transmitted to the duplication requesting node without the determination in the step S403 (step S406).

Next, a description will be given of the data confirmation process by the node A (original node) in the step S408 with reference to FIG. 7. FIG. 7 is a flowchart of the data confirmation process of the step S408 in FIG. 6.

When the confirmation request is received, the CPU 201 starts data confirmation processing shown in FIG. 7. First, the CPU 201 determines whether or not the duplicated data acquired by the duplication requesting node matches the original data stored in the node A (step S501). In the illustrated example, the data information contained in the confirmation request (data information contained in the acquired duplicated data) and the data information contained in the duplicated data of the original data stored in the original node are compared with each other. Then, if the two match each other, it is determined that the duplicated data acquired by the duplication requesting node matches the original data. Further, assuming, for example, the original data is updated, the two do not match each other, and hence it is determined that the duplicated data acquired by the duplication requesting node does not match the original data. Furthermore, if the original data is deleted (not stored), similarly, it is also determined that the duplicated data acquired by the duplication requesting node does not match the original data.

If it is determined in the step S501 that the duplicated data matches the original data, the CPU 201 stores the node information contained in the confirmation request in the duplicating node list 111 in association with the data name of the original data (step S502). Then, the CPU 201 transmits the confirmation OK to the confirmation requesting node (duplication requesting node) as a result of the data confirmation processing (step S503), followed by leaving the present process.

If it is determined in the step S501 that the duplicated data does not match the original data, the CPU 201 transmits the data confirmation NG to the confirmation requesting node (duplication requesting node) as a result of the data confirmation processing (step S504), followed by leaving the present process.

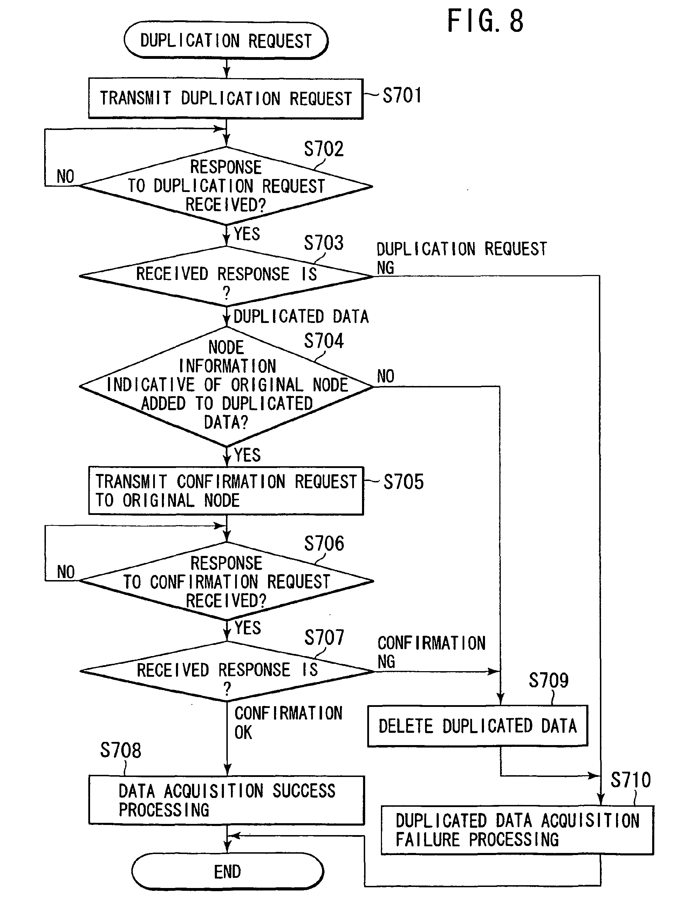

Next, a description will be given of a duplication request process executed by each of the nodes B to D with reference to FIG. 8. FIG. 8 is a flowchart of the duplication request process executed by each of the nodes B to D. The duplication request process in FIG. 8 is carried out by the CPU 201 of each of the nodes B to D according to a program stored in the ROM 202 or the HD 210.

When one of the nodes B to D makes a duplication request, as shown in FIG. 8, the CPU 201 of the one of the nodes B to D transmits the duplication request to the node which stores the original data or the duplicated data (step S701). The node having received the duplication request returns the duplicated data (positive response) or the duplication request NG (negative response) to the duplication requesting node as a response to the duplication request. Then, the CPU 201 waits for reception of the response to the duplication request returned by the duplication requested node (step S702). At this time, if the response is received from the duplication requested node, the CPU 201 determines whether or not the received response is the duplication request NG or the duplicated data (step S703).

If it is determined in the step S703 that the received response is the duplication request NG, the CPU 201 carries out data acquisition failure processing (step S710). In the data acquisition failure processing, a message saying that the duplication request is rejected (acquisition of the requested duplicated data is unsuccessful) is displayed on the display 208. Then, the CPU 201 terminates the present process.

If it is determined in the step S703 that the received response is the duplicated data, the CPU 201 determines whether or not the node information indicative of the original node is added to the duplicated data (step S704). In this step, if the node information indicative of the original node is added, the CPU 201 transmits a confirmation request to the original node indicated by the node information (step S705). Then, the CPU 201 waits for reception of a response returned from the original node against the confirmation request (step S706). The original node (node A) having received the confirmation request carries out data confirmation processing based on the confirmation request (step S408 in FIG. 6), and returns the response (confirmation OK or NG) indicative of the result of the data confirmation processing to the confirmation requesting node.

When the response returned from the original node is received in the step S706, the CPU 201 determines whether the received response is the confirmation OK or the confirmation NG (step S707). Now, if the received response is the confirmation OK, the CPU 201 carries out data acquisition success processing (step S708). In this data acquisition success processing, the received duplicated data is stored such that it can be made open to the public on the LAN 100, and the data status 303 added to the duplicated data is set to "confirmed". Further, a message saying that acquisition of the duplicated data requested by the duplication request is successful is displayed on the display 208. Then, the CPU 201 terminates the present process.

If it is determined in the step S707 that the received response is the confirmation NG, the CPU 201 deletes the received duplicated data (step S709). Then, the CPU 201 carries out data acquisition failure processing to display a message saying that acquisition of the requested duplicated data is unsuccessful (or the duplication request is rejected) on the display 208 (step S710), followed by terminating the present process.

As described above, since the node information indicative of the original node is added to the duplicated data, the node having acquired duplicated data thereof can confirm whether or not the acquired duplicated data matches the original data. As a result, the node which has acquired the duplicated data is permitted to make only the duplicated data confirmed to match the original data open to the public on the LAN 100. Further, the original node can manage nodes storing the duplicated data of the original data using the node information contained in the confirmation request and the duplicating node list 111 stored in the original.

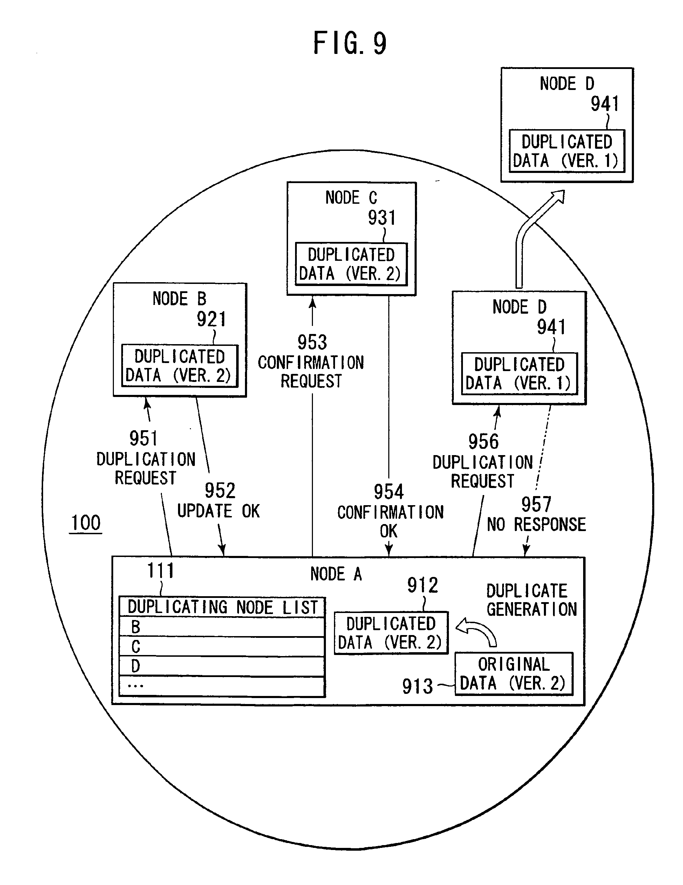

Next, a description will be given of a case where the original data is updated in the node A (original node) with reference to FIG. 9. FIG. 9 is a schematic diagram useful in explaining update requests and responses thereto which are exchanged between the node A and the nodes B, C, and D, when the original data is updated in the node A.

In the node A, assuming, for example, that original data 913 is updated from ver. 1 (version 1) to ver. 2, duplicated data 912 of the original data 913 updated to ver. 2 is created. Then, in the duplicating node list 111, the respective node statuses of the nodes which are registered as the duplication nodes storing the duplicated data of the original data 913 are rewritten into "not updated". In the illustrated example, it is assumed that the nodes B to D store the duplicated data of the original data 913, and these nodes B to D are registered in the duplicating node list 111.

Then, the node A refers to the duplicating node list 111, and transmits an update request for requesting to update the duplicated data to the first node B out of the nodes B to D which store the duplicated data of the original data 913 (951). In this update request, the duplicated data 912 of the original data 913 having been updated to ver. 2 is contained.

The node B which has received the update request rewrites, i.e. updates the duplicated data 912 stored in the corresponding node B to the duplicated data (the duplicated data of ver. 2) contained in the received update request. Then, the node B transmits the update OK to the node A (952). When the node A receives the update OK from the node B, the node status of the node B associated with the corresponding data name in the duplicating node list 111 is rewritten into "updated".

Then, similarly to the case of the node B, the node A transmits an update request to the next node C (953) . The node C which has received the update request rewrites the duplicated data 913 stored therein to the duplicated data (duplicated data of ver. 2) contained in the received update request. Then, the node C transmits the update OK to the node A (954). When the node A receives the update OK from the node C, the node status of the node C associated with the corresponding data name in the duplicating node list 111 is rewritten into "updated".

Then, similarly to the case of the node B, the node A transmits an update request to the next node D (956). Let it be assumed, however, that at this time the node D has already been in a state disconnected from the LAN 100 due to e.g. power-off before the update request is received. In this case, the node D never receives the update request from the node A, and hence never returns a response to the update request to the node A (957). Thus, since there is no response from the node D, the node A continues to store the node status of the node D in the duplicating node list 111 as being set to "not updated". Further, the node D continues to store the duplicated data 941 of the old version (ver. 1) until the node D is connected to the LAN 100. However, since the node D is not connected to the LAN 100, the duplicated data 941 of the old version (ver. 1) is not spread across the LAN 100.

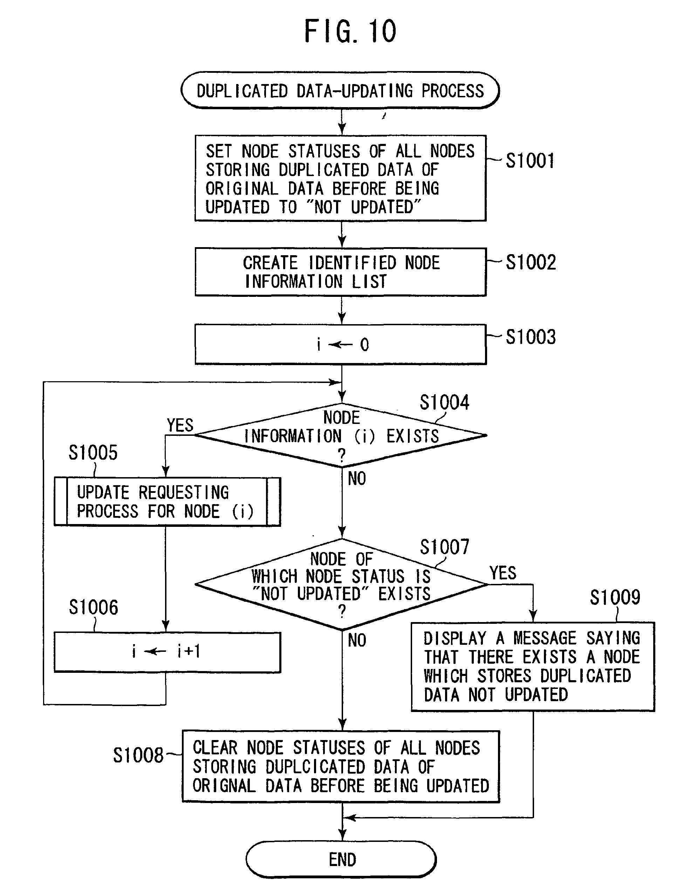

Next, a description will be given of a duplicated data-updating process for updating the duplicated data stored in each of the other nodes B to D, when the node A has updated the original data, with reference to FIG. 10. FIG. 10 is a flowchart of the duplicated data-updating process for updating the duplicated data stored in each of the other nodes B to D, when the node A has updated the original data. The duplicated data-updating process in FIG. 10 is carried out by the CPU 201 of the node A (original node) according to a program stored in the ROM 202 or the HD 210.

When the original data stored in the node A has been updated, as shown in FIG. 10, the CPU 201 of the node A sets the node statuses of all nodes which store the duplicated data of the original data not yet updated to "not updated" (step S1001). Specifically, referring to the duplicating node list 111, all nodes which store the duplicated data of the original data not updated are identified, and the node statuses of all the identified nodes are set to "not updated". Then, the CPU 201 creates an identified node information list in which node information (i) (i ≧ 0) of all the identified nodes is listed (step S1002). Then, the CPU 201 initializes a variable i for acquiring the node information (i) from the identified node information list to 0 (step S1003).

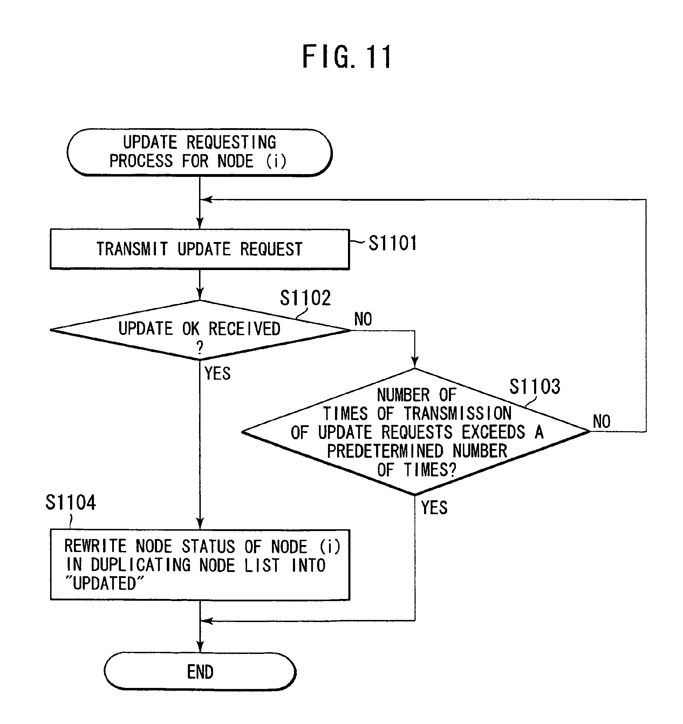

Next, the CPU201 determines whether or not the node information (i) exists on the identified node information list (step S1004). In this step, if the node information (i) exists, the CPU 201 carries out an update requesting process on the node (i) indicated by the node information (i) (step S1005). The update requesting process will be described in detail hereinafter with reference to FIG. 11. Then, the CPU 201 increments the variable i by one (step S1006), and returns to the step S1004.

If it is determined in the step S1004 that the node information (i) does not exist, the CPU 201 determines whether or not a node of which the node status is "not updated" exists among all the identified nodes of the duplicating node list 111 (step S1007). In this step, if there is not any node of which the node status is "not updated", the CPU 201 clears the node statuses of all the identified nodes of the duplicating node list 111 (step S1008). In this step, since the node statuses of all the identified nodes have been rewritten into "updated", the node statuses are cleared. Then, the CPU 201 terminates the present process.

If it is determined in the step S1007 that there is a node of which the node status is "not updated", the CPU 201 displays a message saying that there is a node which stores the duplicated data which has not been updated, on the display 208 (step S1009), followed by terminating the present process.

Next, a detailed description will be given of the update requesting process for the node (i) of the step S1005 with reference to FIG. 11. FIG. 11 is a flowchart of the update requesting process for the node (i) of the step S1005 in FIG. 10.

In the update requesting process, as shown in FIG. 11, first, the CPU 201 transmits the update request to the node (i) indicated by the node information (i) (step S1101). The update request contains the data information for identifying the duplicated data to be updated and the duplicated data of the updated original data.

Then, CPU 201 determines whether or not the update OK indicative of the success of updating the duplicated data is received from the node (i) (step S1102) as a response to the update request. In this step, if the update OK is not received from the node (i), the CPU 201 determines whether or not the number of times of transmission of the update requests exceeds a predetermined number of times (step S1103). If the number of times of transmission of the update requests does not exceed the predetermined number of times, the CPU 201 returns to the step S1102 to transmit another update request, whereas if the number of times of transmission of the update requests exceeds the predetermined number of times, the CPU 201 judged that update of the duplicated data is unsuccessful in the node (i) since there is no response of the update OK from the node (i), followed by leaving the present process.

If it is determined in the step S1102 that the update OK is received from the node (i), the CPU 201 rewrites the node status of the node (i) in the duplicating node list 111 into "updated" (step S1104), followed by leaving the present process.

As described above, in case where the update NG from the node (i) is received, or no response is received, the update request is repeatedly transmitted a predetermined number of times until the update OK is received from the node (i). Then, if the update OK is received, that is, the update of the duplicated data is successful in the node (i), the node status of the node (i) in the duplicating node list 111 is rewritten into "updated".

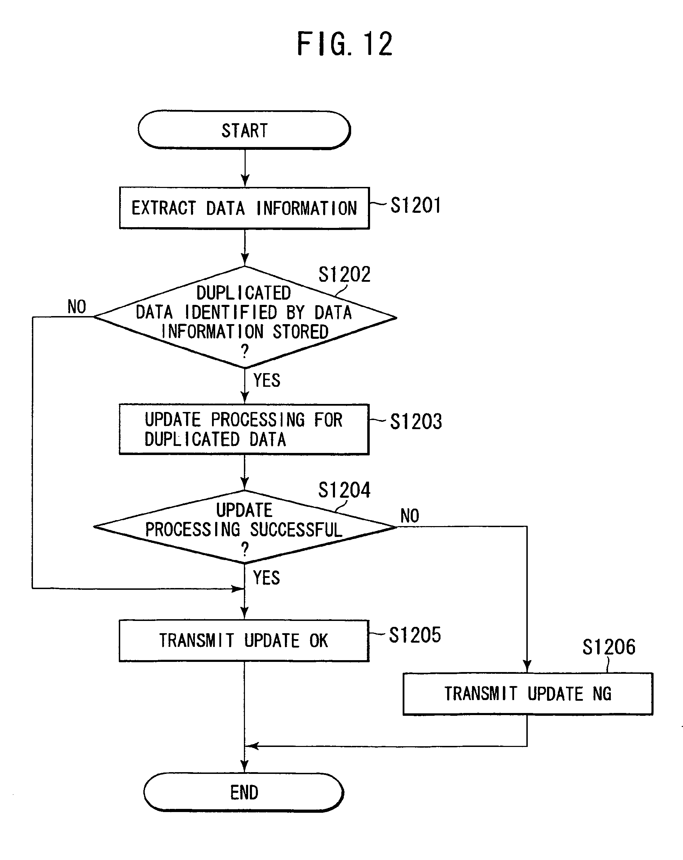

Next, a description will be given of a process executed by each of the nodes B to D, for updating duplicated data requested to be updated by the update request, with reference to FIG. 12. FIG. 12 is a flowchart of a duplicated data update request-responsive process executed by each of the nodes B to D for updating the duplicated data in response to the update request. The duplicated data update request-responsive process in FIG. 12 is carried out by the CPU 201 of each of the nodes B to D according to a program stored in the ROM 202 or the HD 210.

When one of the nodes B to D receives an update request from the node A (original node), as shown in FIG. 12, the CPU 201 of the nodes B to D extracts data information contained in the received update request (step S1201). Then, the CPU 201 determines whether or not the duplicated data which is identified by the extracted data information is stored (step S1202). If it is determined in this step that the identified duplicated data is stored, the CPU 201 carries out update processing for rewriting the stored duplicated data into the duplicated data contained in the update requests (step S1203).

Then, the CPU 201 determines whether or not the update processing is successful (step S1204). In this step, if the update processing is successful, the CPU 201 transmits the update OK to the update requesting node, i.e. the original node (step S1205), followed by terminating the present process.

If it is determined in the step S1204 that the update processing is unsuccessful, the CPU 201 transmits the update NG to the node A (original node) (step S1206), followed by terminating the present process.

If it is determined in the step S1202 that the identified duplicated data is not stored, the CPU 201 skips the steps S1203 and S1204 and transmits the update OK (step S1205). Although in the update requested node, the duplicated data to be updated is not stored, by returning the update OK to the node A (original node), it is possible to prevent the node A from needlessly repeating transmission of the update requests.

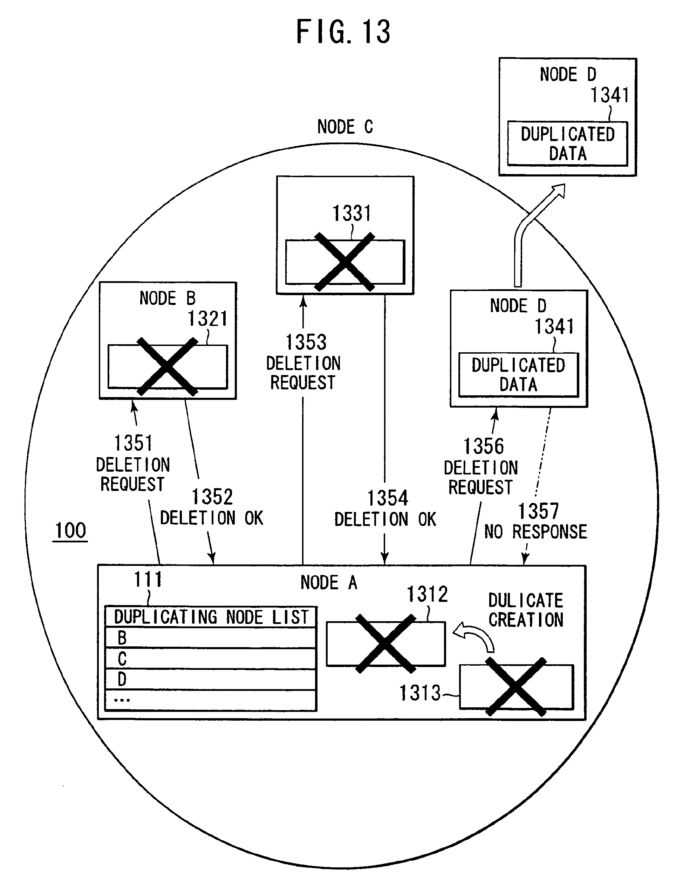

Next, a description will be given of a case where the original data is deleted in the node A with reference to FIG. 13. FIG. 13 is a schematic diagram useful in explaining deletion requests and responses which are exchanged between the node A and each of the nodes B, C, and D, when the original data is deleted in the node A.

As shown in FIG. 13, if original data 1313 is deleted in the node A (original node) which stores the original data 1313, duplicated data 1312 of the original data 1313 is deleted. Now, let it be assumed that the duplicating nodes storing the duplicated data 1312 of the deleted original data 1313 are the nodes B to D. Then, the node A refers to the duplicating node list 111 to thereby identify the nodes B to D as the duplicating nodes storing the duplicated data 1312 of the deleted original data 1313. Then, the node A rewrites the node status of each of the nodes B to D in the duplicating node list 111 into "undeleted".

Then, the node A transmits a deletion request for requesting deletion of the stored duplicated data to all the duplicating nodes B to D (1351, 1353, 1356). This deletion request contains the data information for identifying the duplicated data to be deleted.

For example, when the nodes B and C receive the deletion requests, they delete duplicated data 1321 and 1331 stored in the respective nodes B and C, and return the deletion OK to the node A as a response to the deletion request (1352, 1354). When the node A receives the deletion OK from the nodes B and C, the node A rewrites the node statuses of the nodes B and C having the respective corresponding data names in the duplicating node list 111 into "deleted".

The node D is in a state disconnected from the LAN 100 due to power-off or the like, before it receives the deletion request. Therefore, since the node D does not receive the deletion request, the node D does not return a response to the deletion request to the node A (1357). In this case, in the node D, duplicated data 1341 remains stored without being deleted. However, since the node D is not connected to the LAN 100, the duplicated data 1341 is not spread across the network. The node A receives no response to the deletion request from the node D, so that the node status of the node D in the duplicating node list 111 is not rewritten, and remains to be "undeleted".

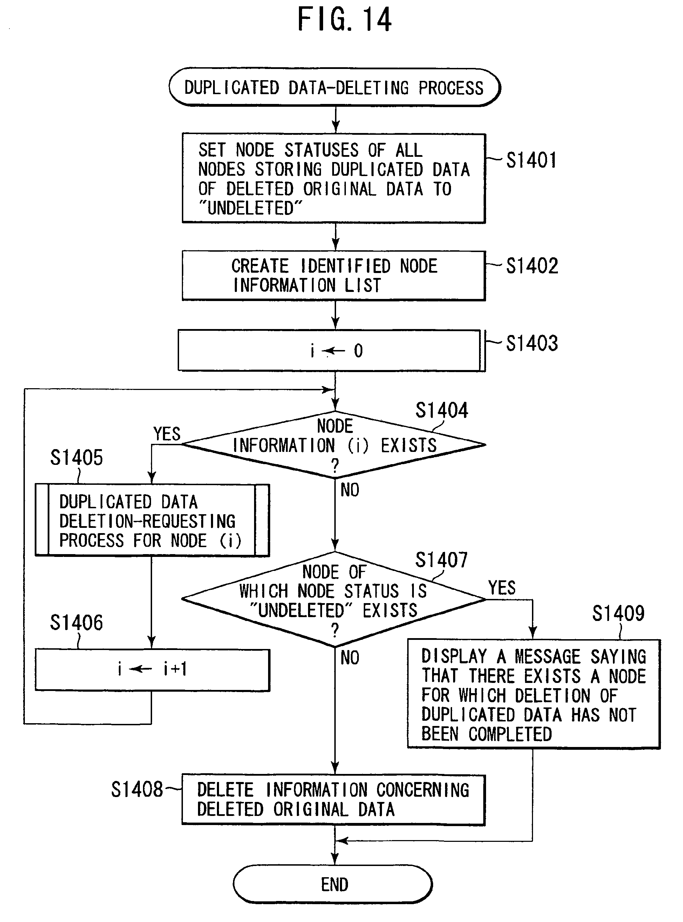

Next, a description will be given of a duplicated data-deleting process for deleting the duplicated data (duplicated data of the deleted original data) which is stored in each of the other nodes B to D when the original data is deleted in the node A, with reference to FIG. 14. FIG. 14 is a flowchart of the duplicated data-deleting process for deleting the duplicated data (duplicated data of the deleted original data) which is stored in each of the other nodes B to D, when the original data is deleted in the node A. The duplicated data-deleting process in FIG. 14 is carried out by the CPU 201 of the node A (original node) according to a program stored in the ROM 202 or the HD 210.

When the original data 1313 is deleted in the node A, as shown in FIG. 14, the CPU 201 sets the node status of all nodes which store the duplicated data of the deleted original data as "undeleted" (step S1401). Specifically, by referring to the duplicating node list 111, all nodes which store the duplicated data of the deleted original data are identified, and the node statuses of all the identified nodes are set to "undeleted". Then, the CPU 201 creates an identified node information list in which node information (i) (i ≧ 0) of all the identified nodes is listed (step S1402). Then, the CPU 201 initializes the variable i for acquiring the node information (i) from the identified node information list to "0" (step S1403).

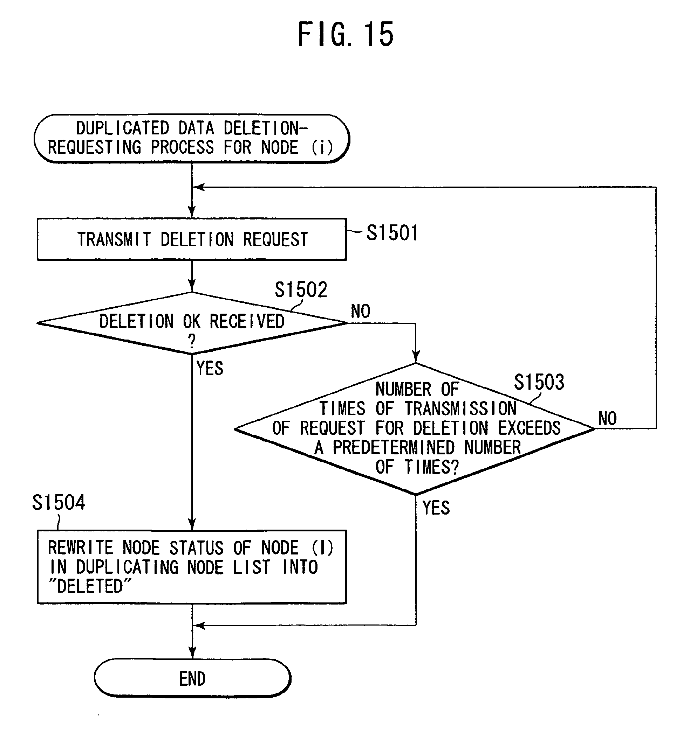

Then, the CPU 201 accesses the identified node information list to determine whether or not the node information (i) exists (step S1404). In this step, if the node information (i) exists, the CPU 201 carries out a duplicated data deletion-requesting process for the node (i) indicated by the node information (i) (step S1405). The duplicated data deletion-requesting process will be described in detail hereinafter with reference to FIG. 15. Then, the CPU 201 increments the variable i by one (step S1406), and returns to the step S1404.

If it is determined in the step S1404 that the node information (i) does not exist, the CPU 201 determines whether or not a node of which the node status is "undeleted" exists among all the identified nodes in the duplicating node list 111 (step S1407). If it is determined in this step that there exists no node of which the node status is "undeleted", the CPU 201 deletes information related the original data which is deleted this time from the duplicating node list 111 (step S1408). That is, entries of the data name, the node information, and the node statuses, associated with the original data which is deleted this time, are deleted. Then, the CPU 201 terminates the present process.

if It is determined in the step S1407 that there exists a node of which the node status is "undeleted", the CPU 201 displays a message saying that there exists a node for which deletion of the duplicated data has not been completed, on the display 208 (step S1409), followed by terminating the present process.

Next, a description will be given of the duplicated data deletion-requesting process for the node (i) in the step S1405 with reference to FIG. 15. FIG. 15 is a flowchart of the duplicated data deletion-requesting process executed in the step S1405 for the node (i) in FIG. 14.

In the duplicated data deletion-requesting process, as shown in FIG. 15, first, the CPU 201 transmits a deletion request to the duplicating node (i) which is indicated by the node information (i) (step S1501). This deletion request contains data information for identifying duplicated data to be deleted.

Then, the CPU 201 determines whether or not the deletion OK is received from the duplicating node (i) as a response to the deletion request within a predetermined time period after the transmission of the deletion request (step S1502). Here, the case where the deletion OK is not received from the node (i) within the predetermined time period includes a case where the deletion NG is received from the node (i) as a response to the deletion request, and a case where the node (i) does not make a response to the deletion request. The deletion NG is a response indicative of failure of deletion of the duplicated data.

If the deletion OK is not received from the duplicating node (i) within the predetermined time period, the CPU 201 determines whether or not the number of times of transmission of the deletion request exceeds a predetermined number of times (step S1503). If it is determined in this step that the number of times of transmission of the deletion requests exceeds the predetermined number of times, the CPU 201 leaves the present process, whereas if the number of times of transmission of the deletion requests does not exceed the predetermined number of times, the CPU 201 returns to the step S1501 to transmit another deletion request.

If the deletion OK is received from the node (i) within the predetermined time period in the step S1502, the CPU 201 rewrites the node status of the node (i) in the duplicating node list 111 into "deleted" (step S1504), followed by terminating the present process.

As described above, when the deletion OK is received from the node (i), that is, when the deletion of the duplicated data is successful in the node (i), the node status of the node (i) in the duplicating node list 111 is rewritten into "deleted".

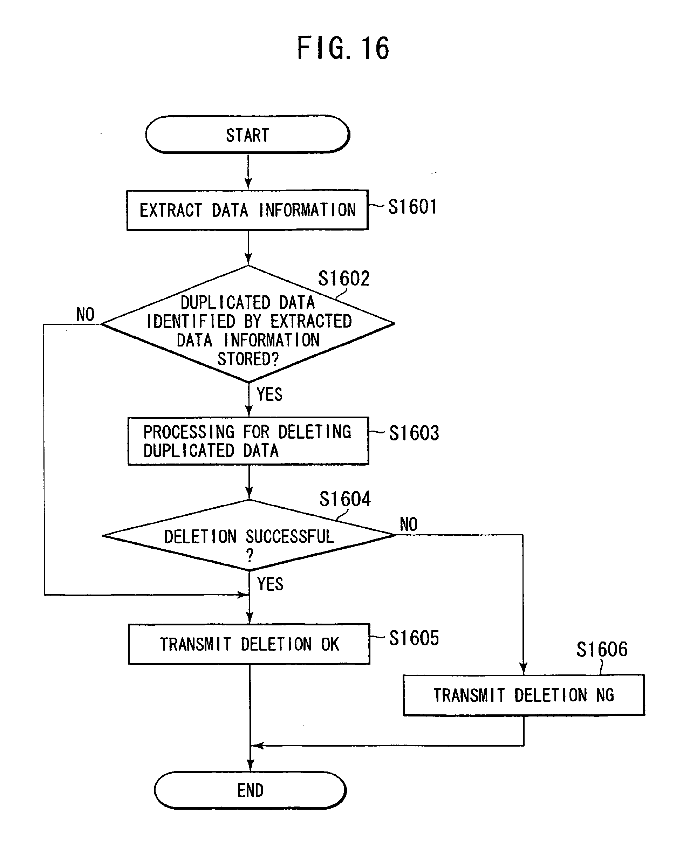

Next, a description will be given of a duplicated data deletion request-responsive process executed by each of the nodes B to D (duplicating nodes) for deleting the duplicated data requested to be deleted by the deletion request, with reference to FIG. 16. FIG. 16 is a flowchart of the duplicated data deletion request-responsive process executed by each of the nodes B to D (duplicating nodes) for deleting the duplicated data which is requested to be deleted by the deletion request. The duplicated data deletion request-responsive process shown in the flowchart of FIG. 16 is carried out by the CPU 201 of each of the nodes B to D according to a program stored in the ROM 202 or the HD 210.

When one of the nodes B to D (duplicating nodes) receives a deletion request from the node A (original node), as shown in FIG. 16, the CPU 201 of the one of the nodes B to D extracts data information for identifying the duplicated data to be deleted, from the received deletion request (step S1601). Then, the CPU 201 determines whether or not the duplicated data identified by the extracted data information is stored (step S1602). In this step, if the identified duplicated data is stored, the CPU 201 carries out deletion processing for deleting the stored duplicated data (step S1603).

Then, the CPU 201 determines whether or not deletion of the duplicated data is successful (step S1604) . If it is determined in this step that the deletion of the duplicated data is successful, the CPU 201 transmits the deletion OK to the deletion requesting node, i.e. the node A (step S1605), followed by terminating the present process.

If it is determined in the step S1604 that the deletion of the duplicated data is unsuccessful, the CPU 201 transmits the deletion NG to the node A (step S1606), followed by terminating the present process.

If it is determined in the step S1602 that the identified duplicated data is not stored, the CPU 201 skips the steps S1603 and S1604 and transmits the deletion OK to the node A (step S1605). Although the duplicated data to be deleted is not stored in the node A, by returning the deletion OK to the node A, it is possible to prevent the node A from needlessly repeating transmission of the deletion request.

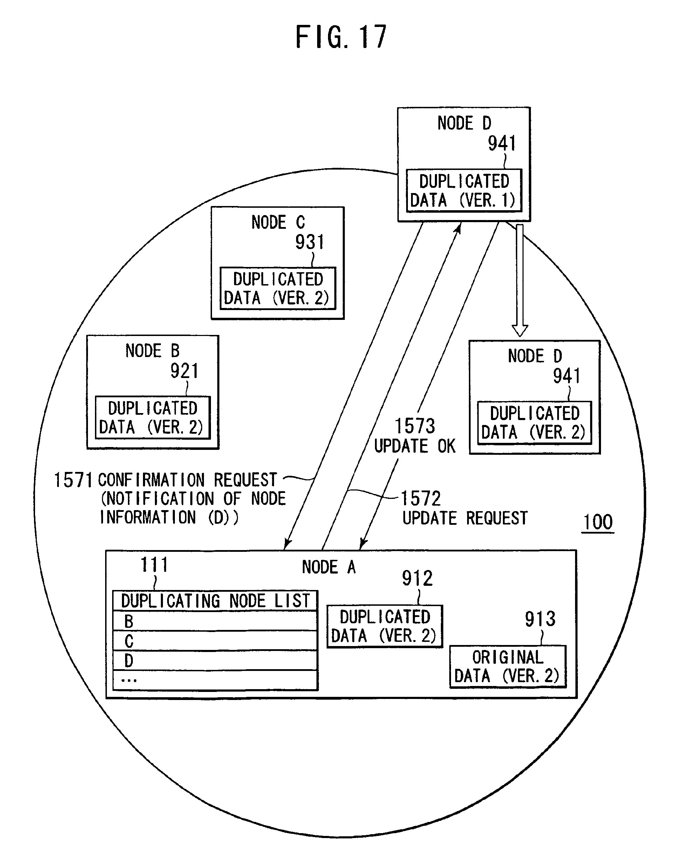

Next, a description will be given of a case where the node storing the duplicated data to be updated is in a state disconnected from the LAN 100 and is connected again thereto, with reference to FIG. 17. FIG. 17 is a schematic diagram useful in explaining requests and responses thereto exchanged between the node D and the node A, in a case where the node D storing the duplicated data 941 to be updated is in a state disconnected from the LAN 100 and is connected again thereto.

Now, as shown in FIG. 17, it is assumed that the nodes B and C stores duplicated data (ver. 2) 921 and 931 of the updated original data (ver. 2) in the node A, which are updated according to the update request from the node A (original node). Further, it is assumed that the node D terminates connection to a LAN 900 before updating the duplicated data (ver. 1) 941, and hence stores the duplicated data (ver. 1) 941 not updated. Further, it is assumed that in the duplicating node list 111, the node statuses of the nodes B and C storing the duplicated data (ver. 2) 921 and 931 are set to "updated", and the node status of the node D is set to "not updated".

When the node D is connected to the LAN 900 by power-on or the like, the node D (second confirmation requesting node) starts processing for confirming whether or not the duplicated data (ver. 1) 941 is to be updated or deleted. First, the node D sets the data status 303 of the duplicated data 941 to "unconfirmed", and transmits a confirmation request (second confirmation request) to the node A (1571). The confirmation request contains data information for identifying the duplicated data 941 of which confirmation is requested and the node information indicative of the node D (second confirmation requesting node).

Upon reception of the confirmation request from the node D, the node A refers to the duplicating node list 111, to thereby confirm whether or not the node status of the node D concerning the duplicated data is "not updated" or "undeleted" (second data confirmation process). In this process, the node A confirms that the node status of the node D associated with the corresponding original data in the duplicating node list 111 is "not updated", and transmits an update request to the node D (1572).

When the node D receives the update request, the node D updates the duplicated data (ver. 1) 941 to the duplicated data (ver. 2) 912 of the updated original data (ver. 2) 913. Then, when the update of the duplicated data is successful, the node D returns the update OK to the node A as a response to the update request (1573). The node A receives the update OK and rewrites the node status of the node D in the duplicating node list 111 into "updated".

The node D sets the data status 303 of the duplicated data 941 to "confirmed" after transmitting the update OK. As a consequence, the node D becomes one of the nodes which take part in the data sharing system, and the duplicated data which is stored in the node D is made open to the other nodes.

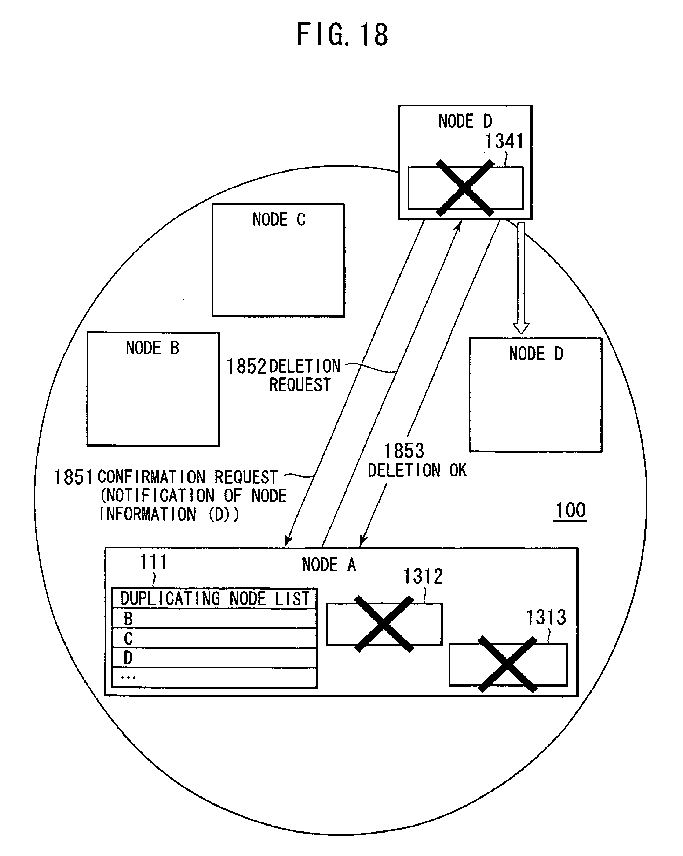

Next, a description will be given of a case where the node storing duplicated data to be deleted is in a state disconnected from the LAN 100 and is connected again thereto, with reference to FIG. 18. FIG. 18 is a schematic diagram useful in explaining requests and a response exchanged between the node D and the node A, when the node D storing the duplicated data 1341 to be deleted is in a state disconnected from the LAN 100 and is connected again thereto.

Now, as shown in FIG. 18, it is assumed that in response to the deletion request from the node A (original node), the corresponding duplicated data (ver. 2) 1321 and 1331 have already been deleted in the nodes B and C. Further, it is assumed that the node D terminates connection to the LAN 900 before the duplicated data 1341 is deleted according to the deletion request, and stores the duplicated data 1341 requested to be deleted. Furthermore, it is assumed that in the duplicating node list 111, the node statuses of the nodes B and C are set to "deleted", and the node status of the node D storing the duplicated data 1341 is set to "undeleted".

When the node D is connected to the LAN 900 by power-on or the like, the node D starts processing for confirming whether or not the duplicated data (ver. 1) 1341 is to be updated or deleted. First, the node D (second confirmation requesting node) sets the data status 303 of the duplicated data 1341 to "unconfirmed", and transmits a confirmation request (second confirmation request) to the node A (1851). The confirmation request contains data information for identifying the duplicated data 1341 of which confirmation is requested and the node information indicative of the node D (second confirmation requesting node).

Upon reception of the confirmation request from the node D, the node A refers to the duplicating node list 111 and confirms whether or not the node status of the duplicated data of the node D is "not updated" or "undeleted" (second data confirmation process). In this process, the node A confirms that the node status of the node D concerning the duplicated data is "undeleted", and transmits a deletion request to the node D (1852).

Upon reception of the deletion request, the node D deletes the duplicated data 1341. Then, when the deletion of the duplicated data is successful, the node D returns the deletion OK to the node A as a response to the deletion request (1853). The node A receives the deletion OK and rewrites the node status of the node D in the duplicating node list 111 into "deleted".

After transmitting the deletion OK, the node D takes part in the data sharing system as one of the nodes of the data sharing system, and the other duplicated data stored in the node D are made open to the other nodes.

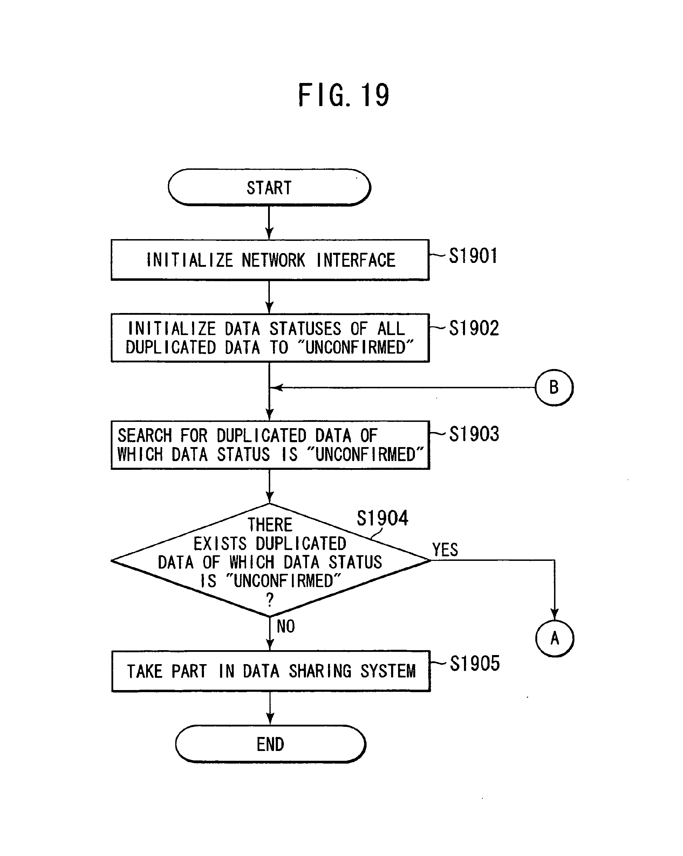

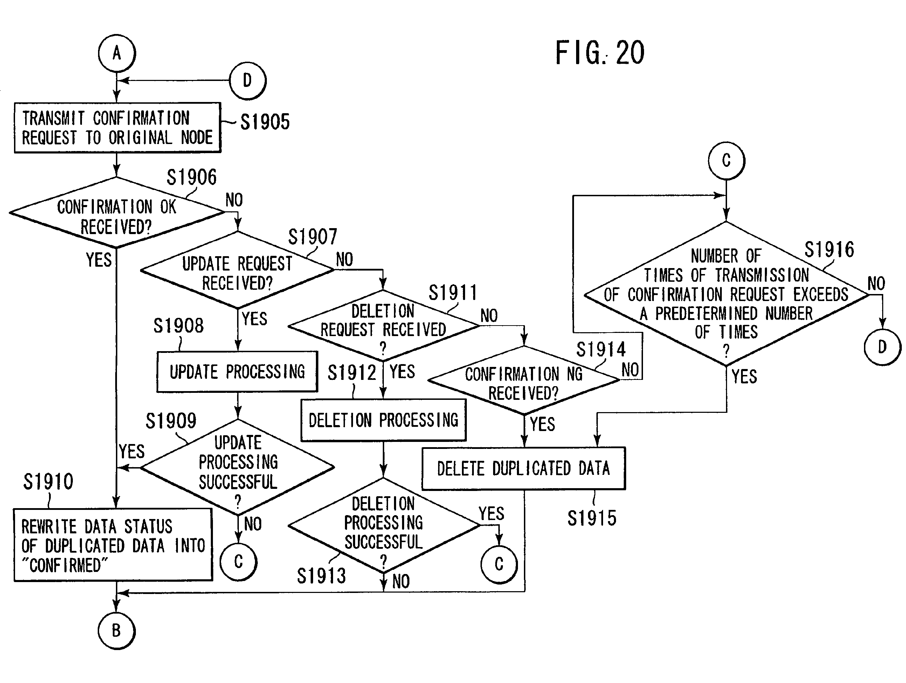

Next, a description will be given of a process for returning to a data sharing system, which is executed when a node disconnected from the LAN 100 is connected again to the LAN 100 to take part in the data sharing system, as in the case of the node D shown in FIG. 17 or FIG. 18, with reference to FIGS. 19 and 20. FIGS. 19 and 20 are a flowchart of the process for returning to a data sharing system when the node disconnected from the LAN 100 is connected again to the LAN 100 to take part in the data sharing system. The process for returning to a data sharing system in FIGS. 19 and 20 is carried out by the CPU 201 of each of the nodes B to D (second confirmation requesting node) according to a program stored in the ROM 202 or the HD 210.

When the node (e.g. the node D) in a state disconnected from the LAN 100 is connected again to thereto, as shown in FIG. 19, first, the CPU 201 of the node carries out initialization of network interface for connection to the LAN 100 (step S1901). Then, the CPU 201 initializes the data statuses of all duplicated data which are stored in the node, that is, sets them to "unconfirmed" (step S1902).

Next, the CPU 201 searches for duplicated data of which the data status is "unconfirmed" (step S1903). Then, the CPU 201 determines from the result of the search whether or not there exists duplicated data of which the data status is "unconfirmed" (step S1904). If it is determined in this step that there exists duplicated data of which the data status is "unconfirmed", as shown in FIG. 20, the CPU 201 transmits a confirmation request for requesting confirmation of the duplicated data (second confirmation request) to the node A (original node) (step S1905). This confirmation request is a request command for confirming whether the duplicated data is valid data, data to be updated, or data to be deleted.

Then, the CPU 201 determines whether or not the confirmation OK which is received returned from the node A as a response to the confirmation request (step S1906). If it is determined in this step that the confirmation OK is received, the CPU 201 rewrites the data status of the duplicated data into "confirmed" (step S1910). Then, the CPU 201 returns to the step S1903.

In the step S1906, it is determined that the confirmation OK is not received, it is determined whether or not an update request is received from the node A (step S1907). If it is determined in this step that the update request is received, the CPU 201 carries out update processing for rewriting the duplicated data into the duplicated data contained in the received update request (step S1908). In this update processing, if the update of the duplicated data is successful, the update OK is transmitted to the node A, whereas if the update of the duplicated data is unsuccessful, the update NG is transmitted to the node A. Then, the CPU 201 determines whether or not the update processing is successful (step S1909). If it is determined in this step that the update processing is successful, the CPU 201 rewrites the data status of the duplicated data into "confirmed" (step S1910), and returns to the step S1903.

If it is determined in the step S1907 that the update request is not received, the CPU 201 determines whether or not a deletion request is received (step S1911). If it is determined in this step that the deletion request is received, the CPU 201 carries out deletion processing for deleting the duplicated data (step S1912). In this deletion processing, if the deletion processing is successful, the deletion OK is transmitted to the node A, whereas if the deletion processing is unsuccessful, the deletion NG is transmitted to the node A. Then, the CPU 201 determines whether or not the deletion processing is successful (step S1913). If it is determined in this step that the deletion processing is successful, the CPU 201 returns to the step S1903.

If it is determined in the step S1911 that the deletion request is not received, the CPU 201 determines whether or not the confirmation NG is received (step S1914) . If the confirmation NG is received, the CPU 201 deletes the duplicated data (step S1915). Then, the CPU 201 returns to the step S1903.

If it is determined in the step S1914 that the confirmation NG is not received, the CPU 201 determines whether or not the number of times of transmission of the confirmation request exceeds a predetermined number of times (step S1916). If it is determined in this step that the number of times of transmission of the above-mentioned confirmation request does not exceed the predetermined number of times, the CPU 201 returns to the step S1905 to transmit another confirmation request to the node A, whereas if the number of times of transmission of the confirmation request exceeds the predetermined number of times, the CPU 201 judges that the result of confirmation responsive to the confirmation request is not acquired, and deletes the duplicated data (step S1915). Then, the CPU 201 returns to the step S1903.

If it is determined in the step S1909 that the update processing is unsuccessful, and if it is determined in the step S1913 that the deleting process is unsuccessful, the CPU 201 proceeds to the step S1916.

If it is determined in the step S1904 that there exists no duplicated data of which the data status is "unconfirmed", the CPU 201 takes part in the data sharing system (step S1917), followed by terminating the present process.

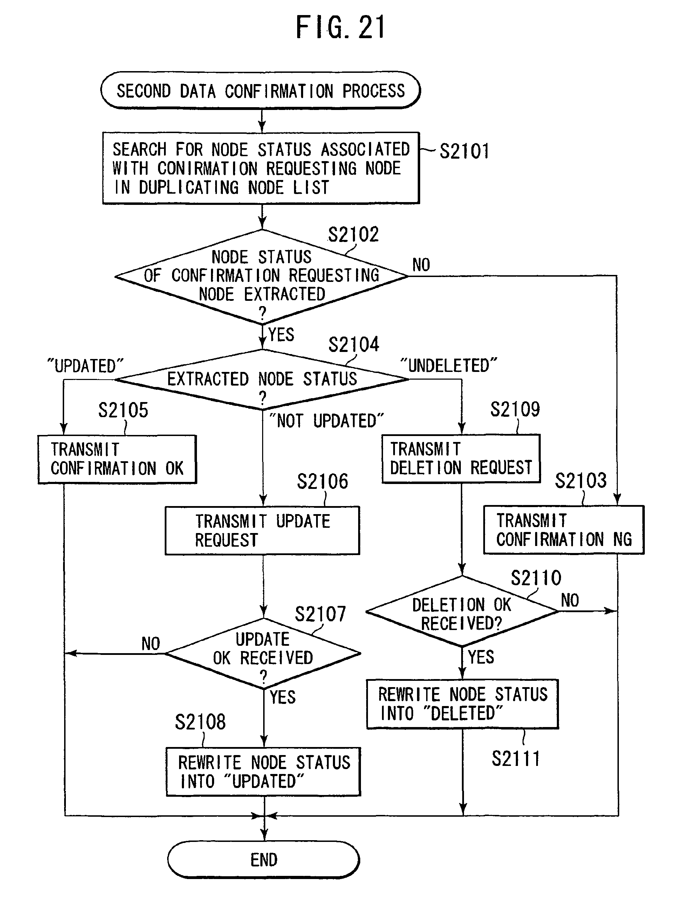

Next, a description will be given of the second data confirmation process executed by the node A (original node) which has received the confirmation request from the node having returned from the state disconnected from the LAN 100 to the state connected thereto, with reference to FIG. 21. FIG. 21 is a flowchart of the second data confirmation process executed by the node A (original node) which has received the confirmation request from the node having returned from the state disconnected from the LAN 100 to the state connected thereto. The second data confirmation process in FIG. 21 is carried out by the CPU 201 of the node A according to a program stored in the ROM 202 or the HD 210.

When the node A (original node) receives the confirmation request (second confirmation request) from the node (second confirmation requesting node) which is returned to the state connected to the LAN 100, the CPU 201 of the node A starts second data confirmation processing (second confirmation process) in FIG. 21.

First, the CPU 201 of the node A searches the duplicating node list 111 for a node status associated with the node which stores the duplicated data, based on the data information and the node information contained in the confirmation request (step S2101). Then, the CPU 201 determines whether or not the node status of the node which stores the duplicated data is extracted by the search (step S2102). Here, the case where the node status of the node which stores the duplicated data is not extracted includes a case where the confirmation requesting node which stores the duplicated data is not registered in the duplicating node list 111, and a case where it is not registered in the list that the duplicated data is stored in the confirmation requesting node. In such cases, the CPU 201 cannot confirm whether or not the duplicated data is valid data, and hence it transmits the confirmation NG to the confirmation requesting node (step S2103), followed by terminating the present process.

If it is determined in the step S2012 that the node status of the node which stores the duplicated data is extracted, the CPU 201 performs determination as to the extracted node status (step S2104). In the illustrated example, it is determined whether the node status is "updated" (or in a cleared state), "not updated", or "undeleted".

If the node status is "updated" (or in a cleared state), the CPU 201 transmits the confirmation OK which indicates that the duplicated data matches the original data to the confirmation requesting node (step S2105), followed by terminating the present process.

If the node status is "not updated", the CPU 201 transmits an update request for requesting the update of the duplicated data which is stored in the confirmation requesting node (step S2106). This update request contains the duplicated data of the updated original data. Then, the CPU 201 determines whether or not the update OK is received from the confirmation requesting node (step S2107). If it is determined in this step that the update OK is received, the CPU 201 rewrites the node status associated with the confirmation requesting node in the duplicating node list 111 from "not updated" into "updated" (step S2108), followed by terminating the present process, whereas if the update OK is not received, the CPU 201 terminates the present process.

If the node status is "undeleted", the CPU 201 transmits a deletion request for requesting deletion of the duplicated data stored in the confirmation requesting node to the same (step S2109). Then, the CPU 201 determines whether or not the deletion OK is received from the confirmation requesting node as a response to the deletion request (step S2110). If it is determined in this step that the deletion OK is received, the CPU 201 rewrites the node status associated with the confirmation requesting node in the duplicating node list 111 from "undeleted" into "deleted" (step S2111), followed by terminating the present process, whereas if the deletion OK is not received, the CPU 201 terminates the present process.

As described above, when the node disconnected from the LAN 100 is connected again thereto to take part in the data sharing system, the original node is requested to confirm whether or not the duplicated data already stored in the corresponding node is valid. Then, as a result of this confirmation request, all the duplicated data stored in the node which takes part in the data sharing system again are changed into "confirmed" data, i.e. valid data.
Therefore, it is possible to prevent invalid duplicated data from being spread from the node which takes part in the data sharing system again, to the other nodes.

Although in the present embodiment, as the information processing apparatus which forms a node, the multifunction peripheral has been described, by way of example, the information processing apparatus may be a printer, a scanner, a facsimile machine, a PC, or a like apparatus.

It is to be understood that the present invention may also be realized by supplying a system or an apparatus with a computer-readable storage medium in which a program code of software, which realizes the functions of the above described embodiment is stored, and causing a computer (or CPU or MPU) of the system or apparatus to read out and execute the program code stored in the computer-readable storage medium.

In this case, the program code itself read from the computer-readable storage medium realizes the functions of the embodiment, and therefore the program code and the computer-readable storage medium in which the program code is stored constitute the present invention.

Examples of the computer-readable storage medium for supplying the program code include a floppy (registered trademark) disk, a hard disk, a magnetic-optical disk, an optical disk, such as a CD-ROM, a CD-R, a CD-RW, a DVD-ROM, a DVD-RAM, a DVD-RW, or a DVD+RW, a magnetic tape, a nonvolatile memory card, and a ROM. Alternatively, the program may be downloaded via a network.

Further, it is to be understood that the above described embodiment may be accomplished not only by executing the program code read out by a computer, but also by causing an OS (operating system) or the like which operates on the computer to perform a part or all of the actual operations based on instructions of the program code.

Further, it is to be understood that the above described embodiment may be accomplished by writing a program code read out from the computer-readable storage medium into a memory provided on an expansion board inserted into a computer or a memory provided in an expansion unit connected to the computer and then causing a CPU or the like provided in the expansion board or the expansion unit to perform a part or all of the actual operations based on instructions of the program code.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

This application claims priority from Japanese Patent Application No. 2008-004573 filed January 11, 2008. A data sharing system which is capable of preventing duplicated data which does not match original data stored in an original node from being spread across the network. An original node stores original data. A first duplicating node acquires duplicated data of the original data from the original node, and sends the duplicated data to a second duplicating node. The original node receives a request for confirmation of the duplicated data received from the first duplicating node, from the second duplicating node, compares the duplicated data received by the second duplicating node and the original data with each other, in response to the request, and transmits a request for deletion of the duplicated data, to the second duplicating node, depending on a result of the comparison.

## Claims

1. A data sharing system including a first information processing apparatus (Node A) that stores original data, a second information processing apparatus (Node B) that acquires duplicated data of the original data from the first information processing apparatus (Node A), and a third information processing apparatus (Node C) that is capable of communicating with the first information processing apparatus (Node A) and the second information processing apparatus (Node B) is a network,
the second information processing apparatus (Node B) comprising a duplicated data-transmitting unit adapted to transmit the duplicated data (121) acquired from the first information processing apparatus (Node A) to the third information processing apparatus (Node C), and
the first information processing apparatus (Node A) comprising:
a first storage unit adapted to store original data (113);
a generation unit adapted to generate duplicated data (112) of the original
data (113);
a - second storage unit adapted to store a list (111) for managing information processing apparatuses that store duplicated data of the original data, the list including, in a manner associated with each other, data names of the original data, node information indicating the information processing apparatuses storing the respective duplicated data, and node statuses of the information processing apparatuses concerning the respective duplicated data, wherein the first information processing apparatus is adapted to rewrite the respective node status of the third information processing apparatus storing the respective duplicate data when the original data changes;
a reception unit adapted to receive a request for confirmation of the
duplicated data, from the third information processing apparatus (Node C);
a comparison unit adapted to compare the duplicated data (131) which the third information processing apparatus (Node C) has received and the original data (113)
with each other, in response to the request for confirmation received by the reception unit;
a registration unit adapted to register the node information indicating the third information processing apparatus, associated with the data name of the original data of the duplicated data, in the list (111) depending on the result of comparison by the comparison unit; and
a transmission unit adapted to transmit a request for a corresponding processing of the duplicated data (131), to the third information processing apparatus (Node C), depending on a result of the comparison by the comparison unit or the node status of the third information processing apparatus (Node C) in the list (111).

2. The data sharing system according to claim 1, wherein the transmission unit is adapted to transmit a request for deletion of the duplicated data as the data processing request, to the third information processing apparatus, when the duplicated data received by the third information processing apparatus and the original data do not match, as a result of the comparison by the comparison unit.

3. The data sharing system according to claim 2, wherein the third information processing apparatus is adapted to delete the duplicated data in response to reception of the request for deletion transmitted by the transmission unit, and when the request for deletion is not transmitted by the transmission unit, the third information processing apparatus is adapted to continue to store the duplicated data.

4. The data sharing system according to claim 1, wherein the first information processing apparatus further comprises:
an update unit adapted to update the original data and to set the node statuses of the information processing apparatuses in the list in a not-updated status,
wherein the transmission unit is adapted to transmit a request for updating duplicated data of the original data, as the data processing request, to an information processing apparatus registered in the list, when the original data is updated by the update unit and the node status of the information processing apparatus is the not-updated status, and
wherein the third information processing apparatus is adapted to update the duplicated data of the original data in response to reception of the updating request.

5. The data sharing system according to claim 1, wherein the first information processing apparatus further comprises:
a deletion unit adapted to delete the original data and to set the node statuses of the information processing apparatuses in the list in an undeleted status,
wherein the transmission unit is adapted to transmit a request for deletion of the duplicated data of the original data, as the data processing request, to an information processing apparatus registered in the list, when the original data is deleted by the deletion unit and the node status of the information processing apparatus is the undeleted status, and
wherein the third information processing apparatus is adapted to delete the duplicated data of the original data in response to reception of the request for deletion.

6. The data sharing system according to claim 1, wherein the third information processing apparatus is adapted to send the request for confirmation, when the duplicated data of the original data is acquired from the second information processing apparatus, or when the third information processing apparatus is started.

7. The data sharing system according to claim 1, wherein the duplicated data contains identification information for identifying the first information processing apparatus, and the third information processing apparatus is adapted to transmit the request for confirmation to the first information processing apparatus based on the identification information.

8. A data sharing method for a data sharing system including a first information processing apparatus (Node A) that stores original data (113), and a second information processing apparatus (Node B) that acquires duplicated data (121) of the original data (113) from the first information processing apparatus (Node A), wherein the second information processing apparatus (Node B)
transmits the duplicated data (121) acquired from the first information processing apparatus (Node A) to a third information processing apparatus (Node C),
the first information processing apparatus (Node A).
generating duplicated data (112) of the original data (113);
transmitting the duplicated data (112) to the second information processing apparatus (Node B) in response to a request from the second information processing apparatus (Node B);
storing a list (111) for managing information processing apparatuses that store duplicated data or the original data (113), the list (111) including, in a manner associated with each other, data names of the original data, node information indicating the information processing apparatuses storing the respective duplicated data, and node statuses of the information processing apparatuses concerning the respective duplicated data, wherein the first information processing apparatus rewrites the respective note status of the third information processing apparatuses storing the respective duplicated data when the original data changes;
receiving a request for confirmation of the duplicated data (113), from the third information processing apparatus (Node C);
comparing the duplicated data (131) which the third information processing apparatus (Node C) has received and the original data (113) with each other, in response to the request for confirmation received by the receiving;
registering the node information indicating the third information processing apparatus (Node C), associated with the data name of the original data (113) of the duplicated data (131), in the list (111) depending on the result of comparison by the comparison unit; and
transmitting a request for a corresponding processing of the duplicated data (131), to the third information processing apparatus (Node C), depending on a result of the comparison by the comparing or the node status of the third information processing apparatus (Node C) in the list (111).

9. An information processing apparatus (Node A) that is capabl of communicating with a first information processing apparatus (Node B) and a second information processing apparatus (Node C), comprising.
a first storage unit adapted to store original data (113);
a generation unit adapted to generate duplicated data (112) of the original data (113);
a second storage unit adapted to store a list (111) for managing information processing apparatuses that store duplicated data of the original data (113), the list (111) including, In a manner associated with each other, data names of the original data, node information indicating the information processing apparatuses storing the respective duplicated data, and node statuses of the information processing apparatuses concerning the respective duplicated data, wherein the information processing apparatus is adapted to rewrite the respective node status of the second information processing apparatus storing the respective duplicate data when the original data changes;
a transmission unit adapted to transmit the duplicated data (112) generated by the generation unit to the first information processing apparatus (Node B), in response to a request from the first information processing apparatus (Node B);
a reception unit adapted to receive from the second information processing apparatus (Node C) that has acquired the duplicated data (131) from the first information processing apparatus (Node B), a request for confirmation of the duplicated data (131);
a comparison unit adapted to compare the duplicated data (131) which the
second information processing apparatus (Node C) has acquired and the original data (113) stored in the first storage unit with each other;
a registration unit adapted to register the node information indicating the second information processing apparatus (Node C), associated with the data name of the original data (113) of the duplicated data (131), in the list (111) depending on the result of comparison by the comparison unit; and
a transmission unit adapted to transmit a request for a corresponding processing of the duplicated data (131), to the second information processing apparatus (Node C), depending on a result of the comparison by the comparison unit or the node status of the second information processing apparatus (Node C) in the list (111).

10. A computer-readable storage medium storing a program for causing a computer to execute a data sharing method for an information processing apparatus (Node A) that is capable of communicating with a first information processing apparatus (Node B) and a second information processing apparatus (Node C), the information processing apparatus (Node A), having a storage unit adapted to store original data (113), comprising:
generating duplicated data (112) of the original data (113);
transmitting the duplicated data (112) to the first information processing apparatus (Node B), in response to a request from the first information processing
storing a list (111) for managing information processing apparatuses that store duplicated data of the original data (113), the list including, in a manner associated with each other, data names of the original data, node information indicating the information processing apparatuses storing the respective duplicated data, and node statuses of the information processing apparatuses concerning the respective duplicated data, wherein the information processing apparatus rewrites the respective node status of the second information processing apparatus storing the respective duplicate data when the original data changes,
receiving from the second information processing apparatus (Node C) that has acquired the duplicated data (131) from the first information processing apparatus (Node B) a request for confirmation of the duplicated data;
comparing the duplicated data (131) which the second information processing apparatus has acquired and the original data (113) stored in the storage unit with each other, in response to the received request for confirmation;
registering the node information indicating the second information processing apparatus (Node C), associated with the data name of the original data (113) of the duplicated data (131), in the list (111) depending on the result of comparison by the comparison unit; and
transmitting a request for a corresponding data processing of the duplicated data (131) to the second information processing apparatus (Node C), depending on a result of the comparison or the node status of the second information processing apparatus in the list (111).

## Patentansprüche

1. Datenteilhabesystem mit einer ersten Informationsverarbeitungsvorrichtung (Node A), die ursprüngliche Daten speichert, einer zweiten Informationsverarbeitungsvorrichtung (Node B), die duplizierte Daten der ursprünglichen Daten von der ersten Informationsverarbeitungsvorrichtung (Node A) erhält, und einer dritten Informationsverarbeitungsvorrichtung (Node C), die zur Kommunikation mit der ersten Informationsverarbeitungsvorrichtung (Node A) und der zweiten Informationsverarbeitungsvorrichtung (Node B) über ein Netzwerk imstande ist,
wobei die zweite Informationsverarbeitungsvorrichtung (Node B) eine Duplikatdaten-Übertragungseinheit aufweist, die angepasst ist zum Übertragen der von der ersten Informationsverarbeitungsvorrichtung (Node A) erhaltenen duplizierten Daten (121) an die dritte Informationsverarbeitungsvorrichtung (Node C), und
wobei die erste Informationsverarbeitungsvorrichtung (Node A) aufweist:
eine erste Speichereinheit, die angepasst ist zum Speichern von ursprünglichen Daten (113);
eine Erzeugungseinheit, die angepasst ist zum Erzeugen von duplizierten Daten (112) der ursprünglichen Daten (113);
eine zweite Speichereinheit, die angepasst ist zum Speichern einer Liste (111) zum Verwalten von Informationsverarbeitungsvorrichtungen, die duplizierte Daten der ursprünglichen Daten speichern, wobei die Liste, in einer miteinander in Zusammenhang stehenden Weise, Datennamen der ursprünglichen Daten, Knoteninformationen, die die Informationsverarbeitungsvorrichtungen bezeichnen, die die jeweiligen duplizierten Daten speichern, und Knotenzustände der Informationsverarbeitungsvorrichtungen in Bezug auf die jeweiligen duplizierten Daten umfasst, wobei die erste Informationsverarbeitungsvorrichtung angepasst ist zum Umschreiben des jeweiligen Knotenzustands der dritten Informationsverarbeitungsvorrichtung, die die jeweiligen duplizierten Daten speichert, wenn sich die ursprünglichen Daten ändern;
einer Empfangseinheit, die angepasst ist zum Empfangen einer Anforderung zur Bestätigung der duplizierten Daten von der dritten Informationsverarbeitungsvorrichtung (Node C);
eine Vergleichseinheit, die angepasst ist zum Vergleichen der duplizierten Daten (131), die die dritte Informationsverarbeitungsvorrichtung (Node C) empfangen hat, und der ursprünglichen Daten (113) miteinander, in Erwiderung auf die durch die Empfangseinheit empfangene Anforderung zur Bestätigung;
eine Registrierungseinheit, die angepasst ist zum Registrieren der Knoteninformationen, die die dritte Informationsverarbeitungsvorrichtung bezeichnen, in Zusammenhang mit dem Datennamen der ursprünglichen Daten der duplizierten Daten, in der Liste (111) abhängig von dem Vergleichsergebnis durch die Vergleichseinheit; und
eine Übertragungseinheit, die angepasst ist zum Übertragen einer Anforderung für eine entsprechende Verarbeitung der duplizierten Daten (131) an die dritte Informationsverarbeitungsvorrichtung (Node C) abhängig von einem Ergebnis des Vergleichs durch die Vergleichseinheit oder dem Knotenzustand der dritten Informationsverarbeitungsvorrichtung (Node C) in der Liste (111).

2. Datenteilhabesystem gemäß Anspruch 1, wobei die Übertragungseinheit angepasst ist zum Übertragen einer Anforderung zur Löschung der duplizierten Daten als die Datenverarbeitungsanforderung an die dritte Informationsverarbeitungsvorrichtung, wenn, als Ergebnis des Vergleichs durch die Vergleichseinheit, die durch die dritte Informationsverarbeitungsvorrichtung empfangenen duplizierten Daten und die ursprünglichen Daten nicht übereinstimmen.

3. Datenteilhabesystem gemäß Anspruch 2, wobei die dritte Informationsverarbeitungsvorrichtung angepasst ist zum Löschen der duplizierten Daten in Erwiderung auf Empfang der Anforderung zur Löschung, die durch die Übertragungseinheit übertragen wird, und die dritte Informationsverarbeitungsvorrichtung angepasst ist zum Fortsetzen einer Speicherung der duplizierten Daten, wenn die Anforderung zur Löschung durch die Übertragungseinheit nicht übertragen wird.

4. Datenteilhabesystem gemäß Anspruch 1, wobei die erste Informationsverarbeitungsvorrichtung ferner aufweist:
eine Aktualisierungseinheit, die angepasst ist zum Aktualisieren der ursprünglichen Daten und zum Einstellen der Knotenzustände der Informationsverarbeitungsvorrichtungen in der Liste in einen Nichtaktualisiert-Zustand,
wobei die Übertragungseinheit angepasst ist zum Übertragen einer Anforderung zur Aktualisierung von duplizierten Daten der ursprünglichen Daten als die Datenverarbeitungsanforderung an eine Informationsverarbeitungsvorrichtung, die in der Liste registriert ist, wenn die ursprünglichen Daten durch die Aktualisierungseinheit aktualisiert werden und der Knotenstatus der Informationsverarbeitungsvorrichtung der Nichtaktualisiert-Zustand ist, und
wobei die dritte Informationsverarbeitungsvorrichtung angepasst ist zum Aktualisieren der duplizierten Daten der ursprünglichen Daten in Erwiderung auf Empfang der Aktualisierungsanforderung.

5. Datenteilhabesystem gemäß Anspruch 1, wobei die erste Informationsverarbeitungsvorrichtung ferner aufweist:
eine Löschungseinheit, die angepasst ist zum Löschen der ursprünglichen Daten und zum Einstellen der Knotenzustände der Informationsverarbeitungsvorrichtungen in der Liste in einen Ungelöscht-Zustand,
wobei die Übertragungseinheit angepasst ist zum Übertragen einer Anforderung zur Löschung der duplizierten Daten der ursprünglichen Daten als die Datenverarbeitungsanforderung an eine Informationsverarbeitungsvorrichtung, die in der Liste registriert ist, wenn die ursprünglichen Daten durch die Löschungseinheit gelöscht werden und der Knotenzustand der Informationsverarbeitungsvorrichtung der Ungelöscht-Zustand ist, und
wobei die dritte Informationsverarbeitungsvorrichtung angepasst ist zum Löschen der duplizierten Daten der ursprünglichen Daten in Erwiderung auf Empfang der Anforderung zur Löschung.

6. Datenteilhabesystem gemäß Anspruch 1, wobei die dritte Informationsverarbeitungsvorrichtung angepasst ist zum Senden der Anforderung zur Bestätigung, wenn die duplizierten Daten der ursprünglichen Daten von der zweiten Informationsverarbeitungsvorrichtung erhalten werden, oder wenn die dritte Informationsverarbeitungsvorrichtung gestartet wird.

7. Datenteilhabesystem gemäß Anspruch 1, wobei die duplizierten Daten Identifikationsinformationen zum Identifizieren der ersten Informationsverarbeitungsvorrichtung enthalten, und die dritte Informationsverarbeitungsvorrichtung angepasst ist zum Übertragen der Anforderung zur Bestätigung an die erste Informationsverarbeitungsvorrichtung basierend auf den Identifikationsinformationen.

8. Datenteilhabeverfahren für ein Datenteilhabesystem mit einer ersten Informationsverarbeitungsvorrichtung (Node A), die ursprüngliche Daten (113) speichert, und einer zweiten Informationsverarbeitungsvorrichtung (Node B), die duplizierte Daten (121) der ursprünglichen Daten (113) von der ersten Informationsverarbeitungsvorrichtung (Node A) erhält, wobei die zweite Informationsverarbeitungsvorrichtung (Node B) die von der ersten Informationsverarbeitungsvorrichtung (Node A) erhaltenen duplizierten Daten (121) an eine dritte Informationsverarbeitungsvorrichtung (Node C) überträgt,
wobei die erste Informationsverarbeitungsvorrichtung (Node A) vornimmt:
Erzeugen von duplizierten Daten (112) der ursprünglichen Daten (113);
Übertragen der duplizierten Daten (112) an die zweite Informationsverarbeitungsvorrichtung (Node B) in Erwiderung auf eine Anforderung von der zweiten Informationsverarbeitungsvorrichtung (Node B);
Speichern einer Liste (111) zum Verwalten von Informationsverarbeitungsvorrichtungen, die duplizierte Daten der ursprünglichen Daten (113) speichern, wobei die Liste (111), in einer miteinander in Zusammenhang stehenden Weise, Datennamen der ursprünglichen Daten, Knoteninformationen, die die Informationsverarbeitungsvorrichtungen bezeichnen, die die jeweiligen duplizierten Daten speichern, und Knotenzustände der Informationsverarbeitungsvorrichtungen in Bezug auf die jeweiligen duplizierten Daten umfasst, wobei die erste Informationsverarbeitungsvorrichtung den jeweiligen Knotenzustand der dritten Informationsverarbeitungsvorrichtungen umschreibt, die die jeweiligen duplizierten Daten speichern, wenn sich die ursprünglichen Daten ändern;
Empfangen einer Anforderung zur Bestätigung der duplizierten Daten (131) von der dritten Informationsverarbeitungsvorrichtung (Node C);
Vergleichen der duplizierten Daten (131), die die dritte Informationsverarbeitungsvorrichtung (Node C) empfangen hat, und der ursprünglichen Daten (113) miteinander, in Erwiderung auf die durch das Empfangen empfangene Anforderung zur Bestätigung;
Registrieren der Knoteninformationen, die die dritte Informationsverarbeitungsvorrichtung (Node C) bezeichnen, in Zusammenhang mit dem Datennamen der ursprünglichen Daten (113) der duplizierten Daten (131), in der Liste (111) abhängig von dem Vergleichsergebnis durch die Vergleichseinheit; und
Übertragen einer Anforderung für eine entsprechende Verarbeitung der duplizierten Daten (131) an die dritte Informationsverarbeitungsvorrichtung (Node C) abhängig von einem Ergebnis des Vergleichs durch das Vergleichen oder dem Knotenzustand der dritten Informationsverarbeitungsvorrichtung (Node C) in der Liste (111).

9. Informationsverarbeitungsvorrichtung (Node A), die zur Kommunikation mit einer ersten Informationsverarbeitungsvorrichtung (Node B) und einer zweiten Informationsverarbeitungsvorrichtung (Node C) imstande ist, mit:
einer ersten Speichereinheit, die angepasst ist zum Speichern von ursprünglichen Daten (113);
einer Erzeugungseinheit, die angepasst ist zum Erzeugen von duplizierten Daten (112) der ursprünglichen Daten (113);
einer zweiten Speichereinheit, die angepasst ist zum Speichern einer Liste (111) zum Verwalten von Informationsverarbeitungsvorrichtungen, die duplizierte Daten der ursprünglichen Daten speichern, wobei die Liste (111), in einer miteinander in Zusammenhang stehenden Weise, Datennamen der ursprünglichen Daten, Knoteninformationen, die die Informationsverarbeitungsvorrichtungen bezeichnen, die die jeweiligen duplizierten Daten speichern, und Knotenzustände der Informationsverarbeitungsvorrichtungen in Bezug auf die jeweiligen duplizierten Daten umfasst, wobei die Informationsverarbeitungsvorrichtung angepasst ist zum Umschreiben des jeweiligen Knotenzustands der zweiten Informationsverarbeitungsvorrichtung, die die jeweiligen duplizierten Daten speichert, wenn sich die ursprünglichen Daten ändern;
einer Übertragungseinheit, die angepasst zum Übertragen der durch die Erzeugungseinheit erzeugten duplizierten Daten (112) an die erste Informationsverarbeitungsvorrichtung (Node B) in Erwiderung auf eine Anforderung von der ersten Informationsverarbeitungsvorrichtung (Node B);
einer Empfangseinheit, die angepasst ist zum Empfangen einer Anforderung zur Bestätigung der duplizierten Daten (131) von der zweiten Informationsverarbeitungsvorrichtung (Node C), die die duplizierten Daten (131) von der ersten Informationsverarbeitungsvorrichtung (Node B) erhalten hat;
einer Vergleichseinheit, die angepasst ist zum Vergleichen der duplizierten Daten (131), die die zweite Informationsverarbeitungsvorrichtung (Node C) erhalten hat, und der in der ersten Speichereinheit gespeicherten ursprünglichen Daten (113) miteinander;
einer Registrierungseinheit, die angepasst ist zum Registrieren der Knoteninformationen, die die zweite Informationsverarbeitungsvorrichtung (Node C) bezeichnen, in Zusammenhang mit dem Datennamen der ursprünglichen Daten (113) der duplizierten Daten (131), in der Liste (111) abhängig von dem Vergleichergebnis durch die Vergleichseinheit; und
einer Übertragungseinheit, die angepasst ist zum Übertragen einer Anforderung für eine entsprechende Verarbeitung der duplizierten Daten (131) an die zweite Informationsverarbeitungsvorrichtung (Node C) abhängig von einem Ergebnis des Vergleichs durch die Vergleichseinheit oder dem Knotenzustand der zweiten Informationsverarbeitungsvorrichtung (Node C) in der Liste (111).

10. Computerlesbares Speichermedium, das ein Programm zum Veranlassen eines Computers zum Ausführen eines Datenteilhabeverfahrens für eine Informationsverarbeitungsvorrichtung (Node A) speichert, die zur Kommunikation mit einer ersten Informationsverarbeitungsvorrichtung (Node B) und einer zweiten Informationsverarbeitungsvorrichtung (Node C) imstande ist, wobei die Informationsverarbeitungsvorrichtung (Node A) eine Speichereinheit aufweist, die angepasst ist zum Speichern von ursprünglichen Daten (113), mit:
Erzeugen von duplizierten Daten (112) der ursprünglichen Daten (113);
Übertragen der duplizierten Daten (112) an die erste Informationsverarbeitungsvorrichtung (Node B) in Erwiderung auf eine Anforderung von der ersten Informationsverarbeitungsvorrichtung;
Speichern einer Liste (111) zum Verwalten von Informationsverarbeitungsvorrichtungen, die duplizierte Daten der ursprünglichen Daten (113) speichern, wobei die Liste, in einer miteinander in Zusammenhang stehenden Weise, Datennamen der ursprünglichen Daten, Knoteninformationen, die die Informationsverarbeitungsvorrichtungen bezeichnen, die die jeweiligen duplizierten Daten speichern, und Knotenzustände der Informationsverarbeitungsvorrichtungen in Bezug auf die jeweiligen duplizierten Daten umfasst, wobei die Informationsverarbeitungsvorrichtung den jeweiligen Knotenzustand der zweiten Informationsverarbeitungsvorrichtung umschreibt, die die jeweiligen duplizierten Daten speichert, wenn sich die ursprünglichen Daten ändern;
Empfangen einer Anforderung zur Bestätigung der duplizierten Daten von der zweiten Informationsverarbeitungsvorrichtung (Node C), die die duplizierten Daten (131) von der ersten Informationsverarbeitungsvorrichtung erhalten hat;
Vergleichen der duplizierten Daten (131), die die zweite Informationsverarbeitungsvorrichtung (Node C) erhalten hat, und der in der Speichereinheit gespeicherten ursprünglichen Daten (113) miteinander, in Erwiderung auf die empfangene Anforderung zur Bestätigung;
Registrieren der Knoteninformationen, die die zweite Informationsverarbeitungsvorrichtung (Node C) bezeichnen, in Zusammenhang mit dem Datennamen der ursprünglichen Daten (113) der duplizierten Daten (131), in der Liste (111) abhängig von dem Vergleichsergebnis durch die Vergleichseinheit; und
Übertragen einer Anforderung für eine entsprechende Datenverarbeitung der duplizierten Daten (131) an die zweite Informationsverarbeitungsvorrichtung (Node C) abhängig von einem Ergebnis des Vergleichs oder dem Knotenzustand der zweiten Informationsverarbeitungsvorrichtung in der Liste (111).

## Revendications

1. Système de partage de données comportant un premier appareil de traitement d'informations (Noeud A) qui stocke des données originales, un deuxième appareil de traitement d'informations (Noeud B) qui acquiert des données dupliquées des données originales provenant du premier appareil de traitement d'informations (Noeud A), et un troisième appareil de traitement d'informations (Noeud C) qui est capable de communiquer avec le premier appareil de traitement d'informations (Noeud A) et le deuxième appareil de traitement d'informations (Noeud B) via un réseau,
le deuxième appareil de traitement d'informations (Noeud B) comprenant une unité de transmission de données dupliquées apte à transmettre les données dupliquées (121) acquises en provenance du premier appareil de traitement d'informations (Noeud A) au troisième appareil de traitement d'informations (Noeud C), et
le premier appareil de traitement d'informations (Noeud A) comprenant :
une première unité de stockage apte à stocker des données originales (113) ;
une unité génératrice apte à générer des données dupliquées (112) des données originales (113) ;
une deuxième unité de stockage apte à stocker une liste (111) permettant de gérer les appareils de traitement d'informations qui stockent des données dupliquées des données originales, la liste comportant, de manière à ce qu'ils soient associés les uns aux autres, des noms de données des données originales, des informations de noeuds indiquant les appareils de traitement d'informations stockant les données dupliquées respectives, et des états de noeuds des appareils de traitement d'informations concernant les données dupliquées respectives, dans lequel le premier appareil de traitement d'informations est apte à réécrire l'état de noeud respectif du troisième appareil de traitement d'informations stockant les données dupliquées respectives lorsque les données originales varient ;
une unité de réception, apte à recevoir une demande de confirmation des données dupliquées, en provenance du troisième appareil de traitement d'informations (Noeud C);
une unité de comparaison, apte à comparer les unes aux autres les données dupliquées (131) que le troisième appareil de traitement d'informations (Noeud C) a reçues et les données originales (113), en réponse à la demande de confirmation reçue par l'unité de réception ;
une unité d'enregistrement, apte à enregistrer les informations de noeuds indiquant le troisième appareil de traitement d'informations, associées au nom de données des données originales des données dupliquées, dans la liste (111) en fonction du résultat de la comparaison effectuée par l'unité de comparaison ; et
une unité de transmission, apte à transmettre une demande portant sur un traitement correspondant des données dupliquées (131) au troisième appareil de traitement d'informations (Noeud C), en fonction d'un résultat de la comparaison effectuée par l'unité de comparaison ou de l'état de noeud du troisième appareil de traitement d'informations (Noeud C) contenu dans la liste (111).

2. Système de partage de données selon la revendication 1, dans lequel l'unité de transmission est apte à transmettre une demande de suppression des données dupliquées en tant que demande de traitement de données, au troisième appareil de traitement d'informations, lorsque les données dupliquées reçues par le troisième appareil de traitement d'informations et les données originales ne concordent pas, en tant que résultat de la comparaison effectuée par l'unité de comparaison.

3. Système de partage de données selon la revendication 2, dans lequel le troisième appareil de traitement d'informations est apte à supprimer les données dupliquées en réponse à la réception de la demande de suppression transmise par l'unité de transmission, et lorsque la demande de suppression n'est pas transmise par l'unité de transmission, le troisième appareil de traitement d'informations est apte à continuer de stocker les données dupliquées.

4. Système de partage de données selon la revendication 1, dans lequel le premier appareil de traitement d'information comprend en outre :
une unité de mise à jour, apte à mettre à jour les données originales et à régler les états de noeuds des appareils de traitement d'informations contenus dans la liste à un état non mis à jour,
dans lequel l'unité de transmission est apte à transmettre une demande de mise à jour de données dupliquées des données originales, en tant que demande de traitement de données, à un appareil de traitement d'informations enregistré dans la liste, lorsque les données originales sont mises à jour par l'unité de mise à jour et lorsque l'état de noeud de l'appareil de traitement d'informations est l'état non mis à jour, et
dans lequel le troisième appareil de traitement d'informations est apte à mettre à jour les données dupliquées des données originales en réponse à la réception de la demande de mise à jour.

5. Système de partage de données selon la revendication 1, dans lequel le premier appareil de traitement d'information comprend en outre :
une unité de suppression, apte à supprimer les données originales et à régler les états de noeuds des appareils de traitement d'informations contenus dans la liste à un état non supprimé,
dans lequel l'unité de transmission est apte à transmettre une demande de suppression des données dupliquées des données originales en tant que demande de traitement de données, à un appareil de traitement d'informations enregistré dans la liste, lorsque les données originales sont supprimées par l'unité de suppression et lorsque l'état de noeud de l'appareil de traitement d'informations est l'état non supprimé, et
dans lequel le troisième appareil de traitement d'informations est apte à supprimer les données dupliquées des données originales en réponse à la réception de la demande de suppression.

6. Système de partage de données selon la revendication 1, dans lequel le troisième appareil de traitement d'informations est apte à envoyer la demande de confirmation lorsque les données dupliquées des données originales sont acquises en provenance du deuxième appareil de traitement d'informations ou lorsque le troisième appareil de traitement d'informations est mis en fonctionnement.

7. Système de partage de données selon la revendication 1, dans lequel les données dupliquées contiennent des informations d'identification permettant d'identifier le premier appareil de traitement d'informations, et le troisième appareil de traitement d'informations est apte à transmettre la demande de confirmation au premier appareil de traitement d'informations sur la base des informations d'identification.

8. Procédé de partage de données destiné à un système de partage de données comportant un premier appareil de traitement d'informations (Noeud A) qui stocke des données originales (113), et un deuxième appareil de traitement d'informations (Noeud B) qui acquiert des données dupliquées (121) des données originales (113) en provenance du premier appareil de traitement d'informations (Noeud A), dans lequel le deuxième appareil de traitement d'informations (Noeud B) transmet les données dupliquées (121) acquises en provenance du premier appareil de traitement d'informations (Noeud A) à un troisième appareil de traitement d'informations (Noeud C),
le premier appareil de traitement d'informations (Noeud A) :
générant des données dupliquées (112) des données originales (113) ;
transmettant les données dupliquées (112) au deuxième appareil de traitement d'informations (Noeud B) en réponse à une demande provenant du deuxième appareil de traitement d'informations (Noeud B) ;
stockant une liste (111) permettant de gérer les appareils de traitement d'informations qui stockent des données dupliquées des données originales (113), la liste (111) comportant, de manière à ce qu'ils soient associés les uns aux autres, des noms de données des données originales, des informations de noeuds indiquant les appareils de traitement d'informations stockant les données dupliquées respectives, et des états de noeuds des appareils de traitement d'informations concernant les données dupliquées respectives, dans lequel le premier appareil de traitement d'informations réécrit l'état de noeud respectif du troisième appareil de traitement d'informations stockant les données dupliquées respectives lorsque les données originales varient ;
recevant une demande de confirmation des données dupliquées (131) en provenance du troisième appareil de traitement d'informations (Noeud C) ;
comparant les unes aux autres les données dupliquées (131) que le troisième appareil de traitement d'informations (Noeud C) a reçues et les données originales (113), en réponse à la demande de confirmation reçue lors de la réception ;
enregistrant les informations de noeuds indiquant le troisième appareil de traitement d'informations (Noeud C), associées au nom de données des données originales (113) des données dupliquées (131), dans la liste (111) en fonction du résultat de la comparaison effectuée par l'unité de comparaison ; et
transmettant une demande portant sur un traitement correspondant des données dupliquées (131) au troisième appareil de traitement d'informations (Noeud C), en fonction d'un résultat de la comparaison effectuée lors de la comparaison ou de l'état de noeud du troisième appareil de traitement d'informations (Noeud C) contenu dans la liste (111).

9. Appareil de traitement d'informations (Noeud A) capable de communiquer avec un premier appareil de traitement d'informations (Noeud B) et un deuxième appareil de traitement d'informations (Noeud C), comprenant :
une première unité de stockage apte à stocker des données originales (113) ;
une unité génératrice apte à générer des données dupliquées (112) des données originales (113) ;
une deuxième unité de stockage apte à stocker une liste (111) permettant de gérer les appareils de traitement d'informations qui stockent des données dupliquées des données originales (113), la liste (111) comportant, de manière à ce qu'ils soient associés les uns aux autres, des noms de données des données originales, des informations de noeuds indiquant des appareils de traitement d'informations stockant les données dupliquées respectives, et des états de noeuds des appareils de traitement d'informations concernant les données dupliquées respectives, dans lequel l'appareil de traitement d'informations est apte à réécrire l'état de noeud respectif du deuxième appareil de traitement d'informations stockant les données dupliquées respectives lorsque les données originales varient ;
une unité de transmission, apte à transmettre les données dupliquées (112) générées par l'unité génératrice au premier appareil de traitement d'informations (Noeud B), en réponse à une demande provenant du premier appareil de traitement d'informations (Noeud B) ;
une unité de réception, apte à recevoir en provenance du deuxième appareil de traitement d'informations (Noeud C) ayant acquis les données dupliquées (131) en provenance du premier appareil de traitement d'informations (Noeud B), une demande de confirmation des données dupliquées (131) ;
une unité de comparaison, apte à comparer les unes aux autres les données dupliquées (131) que le deuxième appareil de traitement d'informations (Noeud C) a acquises et les données originales (113) stockées dans la première unité de stockage ;
une unité d'enregistrement, apte à enregistrer les informations de noeuds indiquant le deuxième appareil de traitement d'informations (Noeud C), associées au nom de données des données originales (113) des données dupliquées (131), dans la liste (111) en fonction du résultat de la comparaison effectuée par l'unité de comparaison ; et
une unité de transmission, apte à transmettre une demande portant sur un traitement correspondant des données dupliquées (131), au deuxième appareil de traitement d'informations (Noeud C), en fonction d'un résultat de la comparaison effectuée par l'unité de comparaison ou de l'état de noeud du deuxième appareil de traitement d'informations (Noeud C) contenu dans la liste (111).

10. Support de stockage lisible par ordinateur stockant un programme destiné à faire en sorte qu'un ordinateur exécute un procédé de partage de données destiné à un appareil de traitement d'informations (Noeud A) capable de communiquer avec un premier appareil de traitement d'informations (Noeud B) et un deuxième appareil de traitement d'informations (Noeud C), l'appareil de traitement d'informations (Noeud A) comportant une unité de stockage apte à stocker des données originales (113), consistant à :
générer des données dupliquées (112) des données originales (113) ;
transmettre les données dupliquées (112) au premier appareil de traitement d'informations (Noeud B), en réponse à une demande provenant du premier appareil de traitement d'informations ;
stocker une liste (111) permettant de gérer les appareils de traitement d'informations qui stockent des données dupliquées des données originales (113), la liste comportant, de manière à ce qu'ils soient associés les uns aux autres, des noms de données des données originales, des informations de noeuds indiquant les appareils de traitement d'informations stockant les données dupliquées respectives, et des états de noeuds des appareils de traitement d'informations concernant les données dupliquées respectives, dans lequel l'appareil de traitement d'informations réécrit l'état de noeud respectif du deuxième appareil de traitement d'informations stockant les données dupliqués respectives lorsque les données originales varient ;
recevoir en provenance du deuxième appareil de traitement d'informations (Noeud C) ayant acquis les données dupliquées (131) en provenance du premier appareil de traitement d'informations (Noeud B) une demande de confirmation des données dupliquées ;
comparer les unes aux autres les données dupliquées (131) que le deuxième appareil de traitement d'informations à acquises et les données originales (113) stockées dans l'unité de stockage, en réponse à la demande de confirmation reçue ;
enregistrer les informations de noeuds indiquant le deuxième appareil de traitement d'informations (Noeud C), associées au nom de données des données originales (113) des données dupliquées (131), dans la liste (111) en fonction du résultat de la comparaison effectuée par l'unité de comparaison ; et
transmettre une demande portant sur un traitement de données correspondant des données dupliquées (131) au deuxième appareil de traitement d'informations (Noeud C), en fonction d'un résultat de la comparaison ou de l'état de noeud du deuxième appareil de traitement d'informations contenu dans la liste (111).
